# EUROPÄISCHE PATENTSCHRIFT

(11) **EP 2 709 882 B1**
(45) Veröffentlichungstag und Bekanntmachung des Hinweises auf die Patenterteilung: **16.11.2016**
(21) Anmeldenummer: 12710913.0
(22) Anmeldetag: 19.03.2012
(51) Int. Cl.: B60T 1/10

(54) **STEUERVORRICHTUNG FÜR EIN BREMSSYSTEM EINES FAHRZEUGS UND VERFAHREN ZUM BETREIBEN EINES BREMSSYSTEMS EINES FAHRZEUGS**
CONTROL DEVICE FOR A VEHICLE BRAKE SYSTEM, AND METHOD FOR OPERATING A VEHICLE BRAKE SYSTEM
DISPOSITIF DE COMMANDE D'UN SYSTÈME DE FREINAGE D'UN VÉHICULE ET PROCÉDÉ DE FONCTIONNEMENT D'UN SYSTÈME DE FREINAGE D'UN VÉHICULE

(30) Priorität: 17.05.2011 DE 102011075968
(43) Veröffentlichungstag der Anmeldung: 26.03.2014
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim An Der Murr (DE); DROTLEFF, Dirk, 71720 Oberstenfeld (DE)
(86) Internationale Anmeldenummer: PCT/EP2012/054790
(87) Internationale Veröffentlichungsnummer: WO 2012/156125

(56) Entgegenhaltungen:
- EP-A2- 1 795 412
- GB-A- 2 454 064
- US-A1- 2007 013 230
- US-A1- 2008 084 107

## Beschreibung

Die Erfindung betrifft eine Steuervorrichtung für ein Bremssystem eines Fahrzeugs. Des Weiteren betrifft die Erfindung ein Verfahren zum Betreiben eines Bremssystems eines Fahrzeugs.

### Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von dem mindestens einen Radbremszylinder der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Auslassventile der hydraulischen Bremsanlage das aus dem Hauptbremszylinder verschobene Druckmittel über den mindestens einen Radbremszylinder in mindestens eine Speicherkammer überführt wird. Auf diese Weise soll eine von dem elektrischen Antrieb ausgeführte regenerative Abbremsung verblendbar sein.

Außerdem beschreibt die US 2007/0013230 A1 ein Bremssystem für ein Fahrzeug und ein damit ausführbares Bremsverfahren, wobei zum Verblenden einer regenerativen Bremskraft eines elektrischen Antriebsmotors ein Bremsdruckaufbau in einem Bremskreis des Bremssystems verhinderbar sein soll, indem ein Ventil des Bremskreises, welches über eine Saugleitung mit einem Bremsflüssigkeitsreservoir verbunden ist, geöffnet wird.

### Offenbarung der Erfindung

Die Erfindung schafft eine Steuervorrichtung für ein Bremssystem eines Fahrzeugs mit den Merkmalen des Anspruchs 1, ein Bremssystem für ein Fahrzeug mit den Merkmalen des Anspruchs 4 und ein Verfahren zum Betreiben eines Bremssystems eines Fahrzeugs mit den Merkmalen des Anspruchs 5.

### Vorteile der Erfindung

Die vorliegende Erfindung ermöglicht ein Transferieren eines aus dem Hauptbremszylinder herausgedrückten Bremsflüssigkeitsvolumens in das Bremsmediumreservoir unter Umgehung des mindestens einen Radbremszylinders. Das Transferieren erfolgt somit ohne ein Aufbauen eines Restdrucks in dem mindestens einen Radbremszylinder, bzw. eines hydraulischen "Rest-Bremsmoments" an einem Rad.

Das mittels der vorliegenden Erfindung realisierbare Bremssystem ist als ein mit einem minimalen Änderungsaufwand erweitertes Einfachsystem umschreibbar. Damit ist es möglich, eine ausreichende rekuperative Effizienz bei minimalen Mehrkosten zu erzielen. Die Steigerung der rekuperativen Effizienz ist bei der vorliegenden Erfindung hauptsächlich darin begründet, dass das vorgeschlagene Bremssystem den Fahrer bei der Modulationsaufgabe im Falle eines entfallenden regenerativen Bremsmoments unterstützt. Die erfindungsgemäße Technologie ist in der Lage, auf ein reduziertes rekuperatives Bremsmoment der rekuperativen Bremse, beispielsweise aufgrund eines vollen Energiespeichers und/oder einer Fahrzeuggeschwindigkeit unter der zum rekuperativen Bremsen benötigten Mindestgeschwindigkeit, zu reagieren. Insbesondere ist dies ausführbar, ohne dass der Bremsweg verlängert wird oder der Fahrer eine Rückwirkung bei der Betätigung des Bremsbetätigungselements bemerkt.

Es wird darauf hingewiesen, dass die Ausführbarkeit der erfindungsgemäßen Technologie keinen an dem Bremsbetätigungselement, dem Bremskraftverstärker oder in dem Hauptbremszylinder ausgebildeten Leerweg erfordert. Somit kann der Fahrer auch in der Rückfallebene schnell in das Bremssystem einbremsen.

Die vorliegende Erfindung weist einen Jump-In auf. Dies ist so umschreibbar, dass das Bremssystem ein Bremsbetätigungselement aufweist, welches derart an den Hauptbremszylinder angeordnet ist, dass während des Betätigens des Bremsbetätigungselements mit einer Betätigungsstärke ungleich Null aber unter der Mindestbetätigungsstärke, bei welcher die auf das Bremsbetätigungselement aufgebrachte Fahrerbremskraft auf den Hauptbremszylinder-Kolben übertragbar ist, eine Kraftübertragung zwischen dem Bremsbetätigungselement und Hauptbremszylinder-Kolben nicht vorliegt/(nahezu) unterbunden ist. Dies ermöglicht ein Verblenden während eines Nichtvorliegens/einer Unterbindung einer Kraftübertragung zwischen dem Bremsbetätigungselement und dem Hauptbremszylinder-Kolben. Somit ist für den Fahrer kein verändertes Bremsgefühl bei einem regenerativen Bremsen anstelle eines hydraulischen Bremsens wahrnehmbar. Aufgrund der nicht-vorliegenden/(nahezu) unterbundenen Kraftübertragung zwischen dem Hauptbremszylinder-Kolben und dem Bremsbetätigungselement, beispielsweise aufgrund einer vernachlässigbaren (evtl. fehlenden) mechanischen Kopplung bei einer Betätigungsstärke unter dem Mindestbetätigungsstärke, stützt sich die durch den hydraulischen Druckaufbau verursachte Gegenkraft nicht am Bremsbetätigungselement, sondern lediglich an der Verstärkungskraft des Bremskraftverstärkers ab. Die Veränderung der Gegenkraft ist somit für den Fahrer am Bremsbetätigungselement nicht wahrnehmbar. Gleichzeitig hat der Fahrer bei der vorliegenden Erfindung die Möglichkeit, mittels eines Betätigens des Bremsbetätigungselements mit zumindest der Mindestbetätigungsstärke direkt in den Hauptbremszylinder hinein zu bremsen. Somit ist selbst bei einer Funktionsbeeinträchtigung des Bremskraftverstärkers, beispielsweise aufgrund einer Beeinträchtigung der Stromversorgung des Bremssystems, noch ein sicheres Abbremsen des Fahrzeugs gewährleistet.

Man kann dies auch als ein Verblenden innerhalb des Jump-In-Bereichs (des Bremskraftverstärkers) bezeichnen. Der Jump-In-Bereich stellt einen Betätigungsbereich des Bremskraftverstärkers, wie beispielsweise eines Vakuum-Boosters, dar, bei welchem keine/eine vernachlässigbare mechanische Kopplung zwischen dem Bremsbetätigungselement und dem Hauptbremszylinder-Kolben existiert. Trotzdem wird bereits im Jump-In-Bereich in den Hauptbremszylinder gebremst. Somit weist das Bremssystem keinen Leerweg auf und ist insbesondere in der Rückfallebene sicher betreibbar.

Mittels der erfindungsgemäßen Technologie können auch Bremsanforderungen ohne eine Betätigung des Bremsbetätigungselements (aktive Druckaufbauten) ausgeführt werden.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung;
- Fig. 2A bis 2G: eine schematische Gesamtdarstellung, drei schematische Teildarstellungen und drei Koordinatensysteme zum Erläutern einer Ausführungsform eines Bremssystems mit der Steuervorrichtung;
- Fig. 3: ein Flussdiagramm zum Darstellen einer ersten Ausführungsform des Verfahrens;
- Fig. 4A bis 4D: vier Koordinatensysteme zum Darstellen einer zweiten Ausführungsform des Verfahrens;
- Fig. 5A bis 5D: vier Koordinatensysteme zum Erläutern einer dritten Ausführungsform des Verfahrens; und
- Fig. 6A bis 6D: vier Koordinatensysteme zum Erläutern einer vierten Ausführungsform des Verfahrens.

### Ausführungsformen der Erfindung

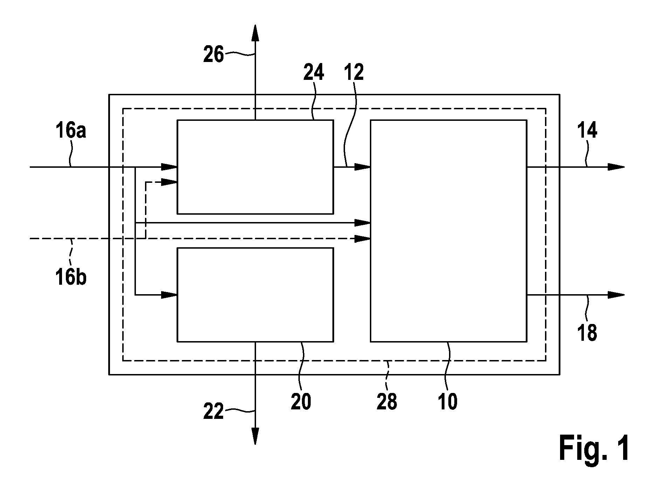

Fig. 1 zeigt eine schematische Darstellung einer Ausführungsform der Steuervorrichtung.

Die in Fig. 1 schematisch wiedergegebene Form der Steuervorrichtung ist für ein Bremssystem eines Fahrzeugs verwendbar. Die Steuervorrichtung weist eine Ventilsteuereinrichtung 10 auf, welche dazu ausgelegt ist, zumindest unter Berücksichtung eines bereitgestellten Informationssignals 12 bezüglich eines aktuell ausgeübten oder auszuübenden Generator-Bremsmoments eines Generators einen ersten Soll-Zustand eines (nicht skizzierten) ersten Ventils des Bremssystems festzulegen. Das erste Ventil ist derart mit einem Hauptbremszylinder des Bremssystems und mit einer Flüssigkeitsspeichervorrichtung des Bremssystems verbunden, dass ein Bremsflüssigkeitsvolumen aus dem Hauptbremszylinder über das in einem zumindest teilgeöffneten Zustand gesteuerte erste Ventil in die Flüssigkeitsspeichervorrichtung verschiebbar ist.

Das erste Ventil kann beispielsweise ein stetig regelbares/stellbares/steuerbares Ventil sein. Insbesondere ist als stetig regelbares Ventil ein Ventil verwendbar, welches zusätzlich zu einem geschlossenen Zustand (geschlossenen Ventilmodus) in mindestens zwei unterschiedliche geöffnete Zustände (geöffnete Ventilmodi) steuerbar/regelbar ist. Die Einsetzbarkeit der Steuervorrichtung ist jedoch nicht auf einen bestimmten Typ eines stetig regelbaren Ventils als erstes Ventil limitiert.

Als Flüssigkeitsspeichervorrichtung ist das erste Ventil über zumindest eine Saugleitung mit einem Bremsmediumreservoir des Bremssystems verbunden. Unter dem Bremsmediumreservoir kann eine Flüssigkeitsspeichervorrichtung verstanden werden, welche mit dem Hauptbremszylinder über mindestens eine Bremsflüssigkeit-Austauschverbindung, wie beispielsweise eine Schnüffelbohrung, verbunden ist. Vorzugsweise ist eine Bremsflüssigkeit druckfrei (gegendruckfrei) in das Bremsmediumreservoir transferierbar. In dem Bremsmediumreservoir kann insbesondere der Atmosphärendruck vorliegen. Auf eine vorteilhafte Anordnung des ersten Ventils an dem Bremsmediumreservoir wird unten noch eingegangen.

Mittels der Ventilsteuereinrichtung 10 ist somit der erste Soll-Zustand für ein über zumindest eine Saugleitung mit dem Bremsmediumreservoir des Bremssystems als Flüssigkeitsspeichervorrichtung verbundenes erstes Ventil festlegbar. Ein dem ersten Soll-Zustand entsprechendes ersten Steuersignal 14 ist mittels der Ventilsteuereinrichtung 10 an das erste Ventil ausgebbar.

Das (mindestens eine) Informationssignal 12 kann beispielsweise von einem Fahrzeugbus, einer Generatorsteuerung und/oder einem Generator-Sensor an die Ventilsteuereinrichtung 10 bereitgestellt werden. Eine weitere vorteilhafte Möglichkeit zum Bereitstellen des Informationssignals 12 an die Ventilsteuereinrichtung 10 wird unten noch genauer beschrieben.

Bevorzugter Weise ist die Ventilsteuereinrichtung 10 zusätzlich dazu ausgelegt, unter Berücksichtigung eines ersten Sensorsignals 16a bezüglich einer Betätigungsstärke einer Betätigung eines Bremsbetätigungselements des Bremssystems (durch den Fahrer) einen zweiten Soll-Zustand eines (nicht dargestellten) zweiten Ventils des Bremssystems festzulegen. In diesem Fall ist das zweite Ventil vorzugsweise als Trennventil zwischen dem Hauptbremszylinder und einem Bremskreis des Bremssystems mit dem ersten Ventil und mindestens einem Radbremszylinder angeordnet. Ein dem zweiten Soll-Zustand entsprechendes zweites Steuersignal 18 ist mittels der Ventilsteuereinrichtung 10 an das zweite Ventil ausgebbar. Auf eine vorteilhafte Anordnung des als Trennventil verwendbaren zweiten Ventils wird unten noch eingegangen. Als Alternative oder als Ergänzung zu der Berücksichtigung des ersten Sensorsignals 16a kann bei der Festlegung des zweiten Soll-Zustands mittels der Ventilsteuereinrichtung 10 auch das Informationssignal 12, der erste Soll-Zustand und/oder ein zweites Sensor- und/oder Informationssignal 16b bezüglich mindestens eines ausführbaren Kann-Generator-Bremsmoments berücksichtigbar sein.

In einer vorteilhaften Ausführungsform ist die Ventilsteuereinrichtung 10 zusätzlich dazu ausgelegt, das erste Sensorsignal 16a mit einem vorgegebenen Vergleichsignal bezüglich einer Mindestbetätigungsstärke zu vergleichen. Unter der Mindestbetätigungsstärke kann eine Betätigungsstärke verstanden werden, ab welcher eine auf das Bremsbetätigungselement aufgebrachte Fahrerbremskraft auf einen verstellbaren Hauptbremszylinder-Kolben des Hauptbremszylinders, wie beispielsweise auf den Stangenkolben des Hauptbremszylinders, übertragbar ist. Sofern das erste Sensorsignal 16a unter dem Vergleichssignal liegt (d.h. sofern die Betätigungsstärke unter der Mindestbetätigungsstärke liegt), wird in diesem Fall mittels der Ventilsteuereinrichtung 10 das zweite Ventil so in einen zumindest teilgeöffneten Zustand gesteuert, dass ein aus dem Hauptbremszylinder herausgedrücktes Bremsflüssigkeitsvolumen über das in dem zumindest teilgeöffneten Zustand gesteuerte zweite Ventil in den Bremskreis verschiebbar ist. Des Weiteren kann die Ventilsteuereinrichtung 10 dazu ausgelegt sein, sofern das erste Sensorsignal 16a das Vergleichssignal übersteigt (d.h. sofern die Betätigungsstärke die Mindestbetätigungsstärke übersteigt), das zweite Ventil so in einen geschlossenen Zustand zu steuern, dass eine hydraulische Verbindung zwischen dem Hauptbremszylinder und dem Bremskreis unterbunden ist.

Die Steuervorrichtung ist somit besonders vorteilhaft einsetzbar mit einem Bremssystem bei welchem das Bremsbetätigungselement so an dem Hauptbremszylinder angeordnet ist, dass bei einer Betätigungsstärke der Betätigung ungleich Null aber unter der Mindestbetätigungsstärke keine Fahrerbremskraft auf den (mindestens einen) verstellbaren Hauptbremszylinder-Kolben übertragbar ist. Wie nachfolgend genauer beschrieben wird, kann in diesem Fall ein Generator zum Aufladen einer Fahrzeugbatterie besonders vorteilhaft während einer Betätigung des Bremsbetätigungselements unter der Mindestbetätigungsstärke, bei welcher der Fahrer keine Rückwirkung/Gegenkraft des Bremssystems an dem Bremsbetätigungselement spürt, eingesetzt werden.

In einer vorteilhaften Weiterbildung umfasst die Steuervorrichtung eine Pumpensteuereinrichtung 20, welche dazu ausgelegt ist, sofern das erste Sensorsignal 16a bei zeitlicher Zunahme der Betätigungsstärke sich dem Vergleichssignal annährt, ein Pumpensteuersignal 22 an eine (nicht skizzierte) Pumpe des Bremssystems auszugeben. Durch das Pumpensteuersignal 22 ist die Pumpe dazu ansteuerbar, ein Bremsflüssigkeitsvolumen aus dem Bremsmediumreservoir über das in dem zumindest teilgeöffneten Zustand vorliegende zweite Ventil in den Hauptbremszylinder zu pumpen. Wie unten genauer ausgeführt wird, ist somit nach einem Verblenden eines Generator-Bremsmoments das zuvor in das Bremsmediumreservoir transferierte Bremsflüssigkeitsvolumen mittels der Pumpe wieder in den Hauptbremszylinder zurückverschiebbar. Auf diese Weise kann gewährleistet werden, dass der Fahrer ab einer Betätigungsstärke gleich der Mindestbetätigungsstärke trotz des zuvor ausgeführten Verblendens des Generator-Bremsmoments ein standardgemäßes Bremsbetätigungsgefühl (Pedalgefühl) hat.

Als Alternative oder als Ergänzung zu der Pumpensteuereinrichtung 20 kann die Steuervorrichtung auch eine Generatorsteuereinrichtung 24 umfassen. Mittels der Generatorsteuereinrichtung 24 kann das auszuübende Generator-Bremsmoment des Generators unter Berücksichtung des ersten Sensorsignals 16a und/oder des zweiten Sensors und/oder Informationssignals 16b bezüglich des mindestens einen ausführbaren Kann-Generator-Bremsmoments festlegbar sein. Anschließend kann ein dem festgelegten auszuübenden Generator-Bremsmoment entsprechendes Generatorsteuersignal 26 an den Generator ausgebbar sein. Ebenso kann von der Generatorsteuereinrichtung 24 das Informationssignal 12 an die Ventilsteuereinrichtung 10 ausgegeben werden.

Die Ventilsteuereinrichtung 10 kann zusammen mit der Generatorsteuereinrichtung 24 und/oder der Pumpensteuereinrichtung 20 in eine Auswerteelektronik 28 integriert sein. In diesem Fall entfällt die Notwendigkeit, die Steuereinrichtungen 10, 20 und 24 getrennt mit auszuwertenden Informationen zu versorgen. Die Steuervorrichtung ist jedoch nicht auf die Integration der Steuereinrichtungen 10, 20 und 24 in eine Auswerteelektronik 28 limitiert.

Die Steuervorrichtung kann insbesondere dazu ausgelegt sein, die Verfahrensschritte der unten genauer beschriebenen Verfahren auszuführen. Bezüglich der mittels der Steuervorrichtung ausführbaren Verfahrensschritte wird deshalb auf die nachfolgende Beschreibung der Verfahren verwiesen.

Auf weiter Vorteile der Steuervorrichtung wird bei der Beschreibung von deren Zusammenwirken mit den Komponenten eines Bremssystems mit Bezug auf die nachfolgende Figur genauer eingegangen.

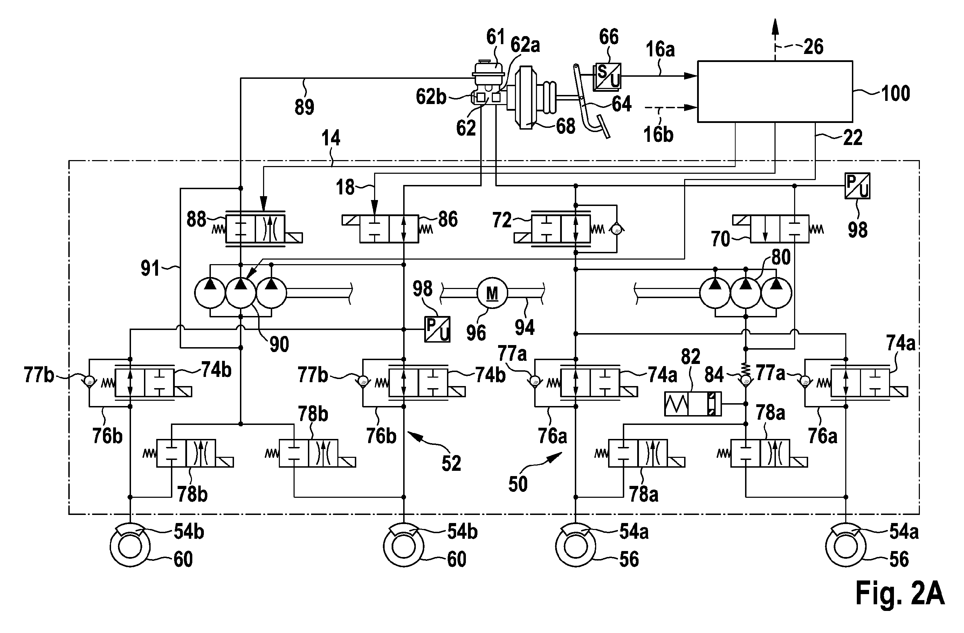

Fig. 2A bis 2G zeigen eine schematische Gesamtdarstellung, drei schematische Teildarstellungen und drei Koordinatensysteme zum Erläutern einer Ausführungsform eines Bremssystems mit der Steuervorrichtung.

Fig. 2A zeigt eine schematische Gesamtdarstellung einer Ausführungsform eines Bremssystems mit der Steuervorrichtung.

Das in Fig. 2A schematisch wiedergegebene Bremssystem ist beispielsweise in einem Hybrid- und in einem Elektrofahrzeug vorteilhaft einsetzbar. Die Einsetzbarkeit des im Weiteren beschriebenen Bremssystems ist jedoch nicht auf die Verwendung in einem Hybrid- oder in einem Elektrofahrzeug beschränkt.

Das Bremssystem hat einen ersten Bremskreis 50 und einen zweiten Bremskreis 52 mit jeweils zwei Radbremszylindern 54a und 54b. Den beiden Radbremszylindern 54a des ersten Bremskreises 50 sind zwei an der Vorderachse angeordnete Räder 56 zugeordnet. Den beiden Radbremszylindern 54b des zweiten Bremskreises 52 sind die Räder 60 an der Hinterachse zugeordnet. Das hier beschriebene Bremssystem ist jedoch nicht auf eine achsweise Bremskreisaufteilung beschränkt.

Das Bremssystem weist einen Hauptbremszylinder 62 auf, welcher beispielsweise als Tandemhauptbremszylinder ausführbar ist. Bevorzugter Weise umfasst der Hauptbremszylinder 62 einen als Stangenkolben bezeichenbaren ersten verstellbaren Kolben, welcher zumindest teilweise an eine dem ersten Bremskreis 50 zugeordnete erste Druckkammer 62a des Hauptbremszylinders 62 hineinragt, und einen als Schwimmkolben bezeichenbaren zweiten verstellbaren Kolben, der zumindest teilweise in eine dem zweiten Bremskreis 52 zugeordnete zweite Druckkammer 62b des Hauptbremszylinders 62 hineinragt. In einer bevorzugten Ausführungsform ist der Schwimmkolben so verstellbar, dass bei einem Verstellen des Schwimmkolbens in eine erste Richtung das erste Innenvolumen der ersten Druckkammer 62a abnimmt, während das Innenvolumen der zweiten Druckkammer 62b zunimmt. Entsprechend kann über ein Verstellen des Schwimmkolbens in eine zweite Richtung das Innenvolumen der ersten Druckkammer 62a bei einer Abnahme des Innenvolumens der zweiten Druckkammer 62b zunehmen. Außerdem kann in der ersten Druckkammer 62a eine härtere Feder angeordnet sein, sodass ein (leichtes) Betätigen des Bremsbetätigungselements 64 zuerst zu einem Einbremsen in die zweite Druckkammer 62b und in den zweiten Bremskreis 52 führt. Auf die vorteilhafte Nutzung eines derart ausgebildeten Hauptbremszylinders 62 wird unten noch genauer eingegangen. Das Bremssystem ist jedoch nicht auf die Verwendung eines Tandemhauptbremszylinders oder auf eine bestimmte Ausbildung des Hauptbremszylinders 62 beschränkt. Der Hauptbremszylinder 62 kann über mindestens eine Bremsflüssigkeit-Austauschöffnung, wie beispielsweise eine Schnüffelbohrung, mit einem Bremsmediumreservoir 61 verbunden sein.

Das Bremssystem weist ein an einem Hauptbremszylinder 62 angeordnetes Bremsbetätigungselement 64, beispielsweise ein Bremspedal, auf. Vorteilhafterweise ist das Bremsbetätigungselement 64 derart an dem Hauptbremszylinder 62 angeordnet, dass bei einem Betätigen des Bremsbetätigungselements 64 mit zumindest einer Mindestbetätigungsstärke eine auf das Bremsbetätigungselement 64 aufgebrachte Fahrerbremskraft auf einen (nicht skizzierten) verstellbaren Hauptbremszylinder-Kolben des Hauptbremszylinders 62 so übertragbar ist, dass der Hauptbremszylinder-Kolben mittels der Fahrerbremskraft verstellbar ist. Bevorzugter Weise wird mittels dieses Verstellens des Hauptbremszylinder-Kolbens ein Innendruck in mindestens einer Kammer des Hauptbremszylinders 62 gesteigert. Bei dem hier beschriebenen Bremssystem ist das Bremsbetätigungselement 64 zusätzlich derart an dem Hauptbremszylinder 62 angeordnet, dass während des Betätigens des Bremsbetätigungselements mit einer Betätigungsstärke ungleich Null aber unter der Mindestbetätigungsstärke eine Kraftübertragung zwischen dem Bremsbetätigungselement 64 und dem Hauptbremszylinder-Kolben unterbunden ist. Dies gewährleistet den Vorteil, dass der Fahrer während des Betätigens des Bremsbetätigungselements 64 mit der Betätigungsstärke unter der Mindestbetätigungsstärke von dem Hauptbremszylinder 62 und dem mindestens einen daran angebundenen Bremskreis 50 und 52 "entkoppelt" ist, und somit keine Rückwirkung des darin vorliegenden Drucks spürt. Auf die vorteilhafte Einsetzbarkeit dieses Vorteils zum Verblenden eines Generator-Bremsmoments wird unten noch genauer eingegangen. Das Bremssystem ist jedoch nicht auf eine derartige Anordnung des Bremsbetätigungselements 64 an dem Hauptbremszylinder 62 beschränkt.

Bevorzugter Weise umfasst das Bremssystem auch einen Bremsbetätigungselement-Sensor 66, mittels welchem die Betätigungsstärke der Betätigung des Bremsbetätigungselements 64 durch den Fahrer ermittelbar ist. Der Bremsbetätigungselement-Sensor 26 kann beispielsweise einen Pedalwegsensor, einen Differenzwegsensor und/oder einen Stangenwegsensor umfassen. Zur Erfassung der Betätigungsstärke, welche dem Fahrerbremswunsch entspricht, ist jedoch auch eine anders geartete Sensorik anstelle oder zusätzlich zu den hier aufgezählten Sensortypen einsetzbar.

Das dargestellte Bremssystem weist in einer bevorzugten Ausführungsform noch einen Bremskraftverstärker 68, wie beispielsweise einen Vakuumbremskraftverstärker, auf. Anstelle eines Vakuumbremskraftverstärkers kann das Bremssystem auch einen anderen Typ des Bremskraftverstärkers 68, wie beispielsweise eine hydraulische und/oder eine elektromechanische Verstärkungseinrichtung, aufweisen. Der Bremskraftverstärker 68 kann insbesondere ein stetig regelbarer/stetig steuerbarer Bremskraftverstärker sein.

Mittels des Bremskraftverstärkers 68 ist in der Regel zumindest während des Betätigens des Bremsbetätigungselements 64 unter der Mindestbetätigungsstärke der Hauptbremszylinder-Kolben so verstellbar, dass ein Bremsflüssigkeitsvolumen aus dem Hauptbremszylinder 62 verschiebbar ist. Ein Bremskraftverstärker 68 weist in der Regel zu Beginn seines Betätigungswegs eine unendliche Verstärkung auf. In diesem Bereich besteht eine vernachlässigbare (evtl. keine) mechanische Kopplung zwischen dem Bremsbetätigungselement 64, wie beispielsweise einem Bremspedal, und dem Hauptbremszylinder-Kolben. Man kann dies auch als Nichtvorliegen einer wesentlichen mechanischen Kopplung zwischen Bremsbetätigungselement 64 und dem Bremssystem bezeichnen. Die Fahrerbremskraft wird in diesem Bereich nicht zur Betätigung des Hauptbremszylinders 62, das heißt zum Verstellen des (mindestens einen) Hauptbremszylinder-Kolbens, herangezogen, sondern lediglich zur Steuerung des Bremskraftverstärkers 68 genutzt.

Der Beginn des Betätigungswegs, in welchem die Betätigungsstärke ungleich Null noch unter der Mindestbetätigung liegt, wird deshalb häufig auch Jump-In-Bereich genannt. Außerhalb des Jump-In-Bereichs existiert eine mechanische Kopplung zwischen dem Bremsbetätigungselement 64 und dem Hauptbremszylinder-Kolben. Die Fahrerbremskraft wird somit außerhalb des Jump-In-Bereichs zum Verstellen des Hauptbremszylinder-Kolbens und somit zum Einbremsen in den mindestens einen Radbremszylinder 54a und 54b genutzt. Dieser Vorgang kann durch die zusätzliche Kraft des Bremskraftverstärkers 68 unterstützt werden.

Die Eigenschaft des Bremskraftverstärkers 68 kann somit für ein Einbremsen in den Hauptbremszylinder 62 ohne eine (wesentliche) mechanische Kopplung/Kraftübertragung zwischen dem Bremsbetätigungselement 64 und dem Hauptbremszylinder-Kolben genutzt werden. Somit ist der Beginn des Betätigungswegs mit einer Betätigungsstärke ungleich Null aber unter der Mindestbetätigung, bzw. der Jump-In-Bereich, vorteilhaft für ein Verblenden eines Generator-Bremsmoments verwendbar, wie unten noch ausgeführt wird.

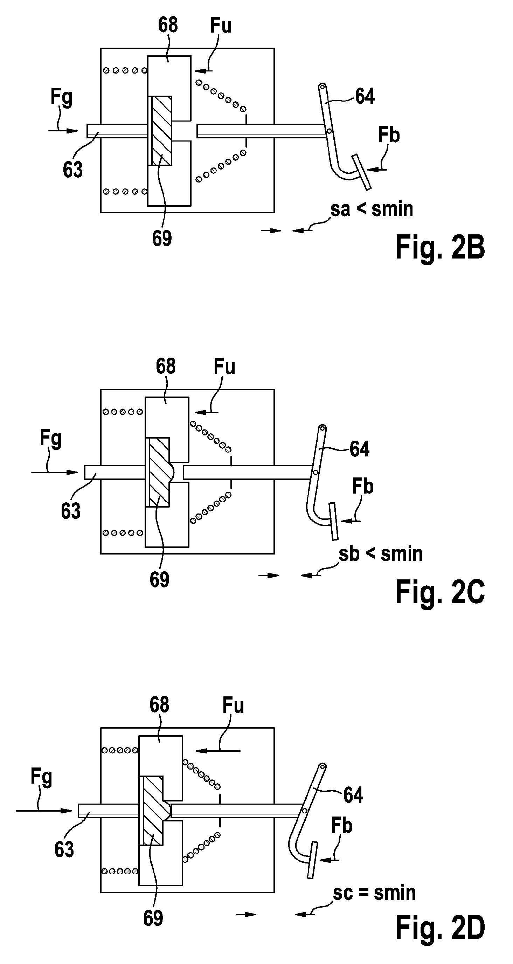

Fig. 2B bis 2D erläutern die vorteilhafte Anordnung des Bremsbetätigungselements 64 an dem Hauptbremszylinder 62:

Wie anhand der Fig. 2B zu erkennen ist, liegt bei einer Betätigungsstärke ungleich Null aber unter der Mindestbetätigungsstärke, z.B. bei einem Bremsbetätigungsweg sa ungleich Null aber unter einem Mindestbremsweg smin, trotz einer Fahrerbremskraft Fb ungleich Null keine Kraftübertragungsverbindung zwischen dem Bremsbetätigungselement 64 und dem mindestens einen verstellbaren Kolben 63 des Hauptbremszylinders 62, wie beispielsweise dem Stangenkolben, vor. Allerdings ist mittels des Bremskraftverstärkers 68 eine Unterstützungskraft Fu auf den verstellbaren Kolben 63 des Hauptbremszylinders 62 ausübbar. Somit kann der verstellbare Kolben 63 trotz der (nahezu) unterbundenen/nicht vorliegenden Kraftübertragung zwischen dem Bremsbetätigungselement 64 und dem verstellbaren Kolben 63 mittels des Bremskraftverstärkers 68 verstellt werden. Entsprechend erhöht sich dem Hineinverstellen des verstellbaren Kolbens 63 entgegenwirkende Gegenkraft Fg. Der Fahrer spürt jedoch aufgrund der (nahezu) unterbundenen Kraftübertragung zwischen dem Bremsbetätigungselement 64 und dem verstellbaren Kolben 63 bei einer Betätigung unter der Mindestbetätigungsstärke die Gegenkraft Fg (unabhängig von ihrer Größe) nicht.

Bei der in Fig. 2C wiedergegebenen Situation liegt der Bremsbetätigungsweg sb noch immer unter dem Mindestbremsweg smin. Entsprechend spürt der Fahrer bei der Betätigung des Bremsbetätigungselements 64 die im Vergleich zu Fig. 2B gesteigerte Gegenkraft Fg nicht.

Erst ab einer Betätigungsstärke gleich der Mindestbetätigungsstärke, z.B. bei einem Bremsbetätigungsweg sc gleich dem Mindestbremsweg smin, liegt ein Kraftübertragungskontakt zwischen dem Bremsbetätigungselement 64 und dem (mindestens einen) verstellbaren Kolben 63 des Hauptbremszylinders 62 vor, wie dies in Fig. 2D gezeigt ist. Der Kraftübertragungskontakt kann beispielsweise über ein elastisches Element, wie insbesondere eine Reakionsscheibe 69, verlaufen.

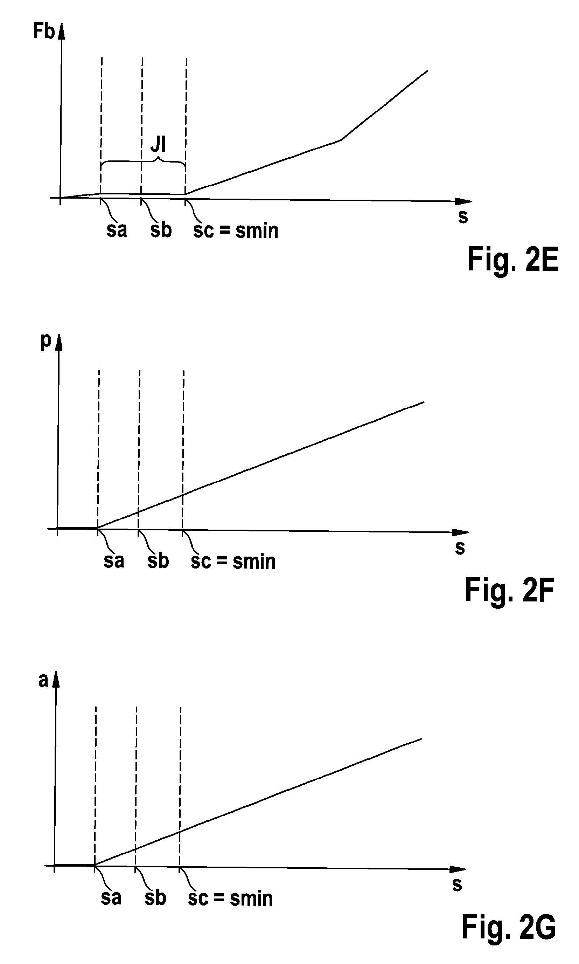

Fig. 2E bis 2G zeigen jeweils ein Koordinatensystem zum Erläutern der Vorteile der bevorzugten Anordnung des Bremsbetätigungselements 64 an dem Hauptbremszylinder 62. In den Koordinatensystemen der Fig. 2E bis 2G sind die Abszissen der als Betätigungsstärke wiedergegebene Bremsbetätigungsweg s. In Fig. 2E gibt die Ordinate die zugehörige Fahrerbremskraft Fb an. Der bei einem Bremsbetätigungsweg s im Hauptbremszylinder 62 vorliegende Druck p wird mittels der Ordinate der Fig. 2F angegeben. Die bei einem Bremsbetätigungsweg s ausgeführte Fahrzeugverzögerung a ist anhand der Ordinate der Fig. 2G erkennbar.

Wie anhand der Fig. 2E erkennbar ist, ist aufgrund der vorteilhaften Anordnung des Bremsbetätigungselements an dem Hauptbremszylinder 62 ein als Jump-In-Bereich JI bezeichenbarer Betätigungsbereich gewährleistet. Innerhalb des Jump-In-Bereichs JI kann der Fahrer das Bremsbetätigungselement 64 mit einer (nahezu) konstanten Fahrerbremskraft Fb verstellen.

Der Fahrer bremst während des Jump-In-Bereichs JI nur indirekt in den Hauptbremszylinder 62 hinein. Dies ist realisierbar, indem unter Verwendung eines Bremsbetätigungselement-Sensors eine dem Bremsbetätigungsweg s entsprechende Fahrzeugverzögerung a als Soll-Fahrzeugverzögerung festgelegt wird (siehe Fig. 2G). Anschließend kann mittels des Bremskraftverstärkers 68 der Druck p in dem Hauptbremszylinder 62 entsprechend der festgelegten Fahrzeugverzögerung a/Soll-Fahrzeugverzögerung eingestellt werden (siehe Fig. 2F). Man kann dies auch so umschreiben, dass der Fahrer weggesteuert in den Hauptbremszylinder 62 hineinbremst.

Nachfolgend werden mit Bezug zu Fig. 2A weitere Komponenten der Ausführungsform des Bremssystems beschrieben. Es wird ausdrücklich drauf hingewiesen, dass die im Weiteren beschriebenen Komponenten des Bremssystems lediglich ein Beispiel für eine mögliche Ausbildung des vorteilhaften Bremssystems darstellen. Ein Vorteil des Bremssystems liegt vor allem darin, dass die Bremskreise 50 und 52 nicht auf eine bestimmte Ausbildung oder auf das Einsetzen bestimmter Komponenten festgelegt sind. Stattdessen können die Bremskreise 50 und 52 mit einer hohen Wahlfreiheit modifiziert werden, ohne dass die Vorteile der Ausführungsform des Bremssystems beeinträchtigt werden:

Der erste Bremskreis 50 ist mit einem Hauptschaltventil 70 und einem Umschaltventil 72 so ausgebildet, dass der Fahrer über den Hauptbremszylinder 62 direkt in die Radbremszylinder 54a des ersten Bremskreises 50 hineinbremsen kann. Jedem der beiden Radbremszylinder 54a des ersten Bremskreises 50 sind ein Radeinlassventil 74a mit einer parallel dazu verlaufenden Bypassleitung 76a, ein in jeder Bypassleitung 76a angeordnetes Rückschlagventil 77a und ein Radauslassventil 78a zugeordnet. Außerdem umfasst der erste Bremskreis 50 eine erste Pumpe 80, deren Ansaugseite mit den Radauslassventilen 78a verbunden ist und deren Förderseite zu dem Umschaltventil 72 gerichtet ist, eine zwischen den Radauslassventilen 78a und der Pumpe 80 angekoppelte Speicherkammer 82 und ein zwischen der ersten Pumpe 80 und der Speicherkammer 82 angeordnetes Überdruckventil 84.

Der zweite Bremskreis 52 ist als ein von dem Hauptbremszylinder 62 entkoppelbarer Bremskreis 52 ausgebildet. Dazu weist der zweite Bremskreis 52 (als zweites Ventil) ein Trennventil 86 auf, mittels welchem die Radbremszylinder 54b des zweiten Bremskreises 52, die den Radbremszylindern 54b zugeordneten Radeinlassventile 74b mit parallel angeordneten Bypassleitungen 76b mit Rückschlagventilen 77b und die den Radbremszylinder 54b zugeordneten Radauslassventile 78b von dem Hauptbremszylinder 62 abkoppelbar sind. Über ein Schließen des Trennventils 86 kann verhindert werden, dass der Bremsdruck in den Radbremszylindern 54b des zweiten Bremskreises 52 dem in der zweiten Druckkammer 62b des Hauptbremszylinders 62 vorliegenden Innendruck entspricht.

Außerdem weist der zweite Bremskreis 52 ein (als erstes Ventil verwendbares) stetig regelbares/verstellbares/steuerbares Ventil 88 und eine zweite Pumpe 90 auf. Anstelle des stetig regelbaren Ventils 88 kann der zweite Bremskreis 52 jedoch auch ein Schaltventil als erstes Ventil 88 haben. Das stetig regelbare Ventil 88 ist über eine Ansaugleitung 89 mit dem Bremsmediumreservoir 61 an dem Hauptbremszylinder 62 hydraulisch verbunden. Die Ansaugseite der zweiten Pumpe 90 ist ebenfalls mit dem Bremsmediumreservoir 61 über eine parallel zu dem stetig regelbaren Ventil 88 und der zweiten Pumpe 90 verlaufende Leitung 91 und die Reservoirleitung 89 hydraulisch so verbunden, dass nach einem Schließen des Trennventils 86 ein Bremsflüssigkeitsvolumen mittels der zweiten Pumpe 90 über die (zumindest teilgeöffneten) Radeinlassventile 74b in die Radbremszylinder 54b des zweiten Bremskreises 52 pumpbar ist. Die Förderseite der zweiten Pumpe 90 ist über das stetig regelbare Ventil 88 so mit dem Bremsmediumreservoir 61 verbunden, dass nach dem Schließen des Trennventils 86 ein Bremsflüssigkeitsvolumen aus den Radbremszylindern 54b des zweiten Bremskreises 52 über die (zumindest teilgeöffneten) Radauslassventile 78b und das (zumindest teilgeöffnete) stetig regelbare Ventil 88 in das Bremsmediumreservoir 61 pumpbar ist.

Somit kann nach dem Schließen des Trennventils 86 das hydraulische Bremsmoment der Radbremszylinder 54b des zweiten Bremskreises 52 mittels der zweiten Pumpe 90 und dem stetig regelbaren Ventil 88 aktiv eingestellt werden. Insbesondere kann das hydraulische Bremsmoment der von dem Hauptbremszylinder 62 entkoppelten Radbremszylinder 54b des zweiten Bremskreises 52 entsprechend einer Differenz zwischen einem von dem Fahrer vorgegebenen Soll-Gesamtbremsmoment und einem Ist-Gesamtbremsmoment aus dem Generator-Bremsmoment des Generators und dem hydraulischen Bremsmoment der Radbremszylinder 54a des ersten Bremskreises 50 eingestellt werden.

Das in Fig. 2A dargestellte Bremssystem ist deshalb als ein "teilentkoppeltes Bremssystem" bezeichenbar. Insbesondere ist eine dem zweiten Bremskreis 52 zugeordnete Achse von dem Hauptbremszylinder 62 "entkoppelbar". Demgegenüber ist die dem ersten Bremskreis 50 zugeordnete Achse (wie bei einem Standardbremssystem) konstant mit dem Hauptbremszylinder 62 "gekoppelt/verbunden".

Die Pumpen 80 und 90 können jeweils als Drei-Kolben-Pumpen auf einer gemeinsamen Welle 94 eines Motors 96 angeordnet sein. Anstelle von Drei-Kolben-Pumpen sind jedoch auch andere Pumpentypen für die Pumpen 80 und 90 verwendbar. Außerdem kann jeder der beiden Bremskreise 50 und 52 noch mindestens einen Drucksensor 98 umfassen.

Die in den oberen Absätzen beschriebenen Komponenten 70 bis 96 des Bremssystems stellen lediglich Beispiele für eine Ausstattung eines mit der nachfolgend genauer beschriebenen Steuervorrichtung 100 ausgestatteten Bremssystems dar.

Durch die Verwendung der oben schon beschriebenen Steuervorrichtung 100 mit dem Bremssystem ist eine Vergleichsweise hohe Effizienz bei einer Rekuperation erzielbar:

Mittels eines Schaltens des stetig regelbaren Ventils 88 durch das erste Steuersignal 14 kann ein aus dem Hauptbremszylinder 62 heraus gedrücktes Bremsflüssigkeitsvolumen wahlweise in die Radbremszylinder 54b des zweiten Bremskreises 52 oder in das Bremsmediumreservoir 61 verschoben werden. Man kann dies so umschreiben, dass mittels eines Ansteuerns des stetig regelbaren Ventils 88 durch das erste Steuersignal 14 ein "hydraulischer Leerweg" realisierbar ist. Das Aktivieren des "hydraulischen Leerwegs" durch Öffnen des stetig regelbaren Ventils 88 bewirkt (aufgrund des geringeren Gegendrucks in dem Bremsmediumreservoir 61 gegenüber den Radbremszylindern 54b des zweiten Bremskreises 52) das Verschieben des aus dem Hauptbremszylinder 62 heraus gedrückten Bremsflüssigkeitsvolumens in das Bremsmediumreservoir 61. In diesem Fall findet kein wesentlicher Druckaufbau im Hauptbremszylinder 62 statt. Durch einen minimalen Druck wird Volumen stattdessen in das Bremsmediumreservoir 61 verschoben. Dieser Druck ist so gering (0,0x bar), dass die Radbremszylindern 54a und 54b (Bremszangen) noch deutlich unter ihrem Ansprechdruck sind.

Aufgrund des geringeren Gegendrucks in dem Bremsmediumreservoir 61 gegenüber den Radbremszylindern 54a des ersten Bremskreises 50 und der vorteilhaften Verstellbarkeit des Schwimmkolbens bewirkt der "hydraulische Leerweg" auch eine Unterbindung eines hydraulischen Druckaufbaus in dem ersten Bremskreis 50. Das Schalten des stetig regelbaren Ventils 88 durch das erste Steuersignal 14 gewährleistet deshalb, dass bei einer (leichten) Betätigung des Bremsbetätigungselements 64 der Bremsdruck in den Radbremszylindern 54a und 54b beider Bremskreise 50 und 52 nicht gesteigert wird.

Trotzdem kann über den Sensor 66 ein Fahrerbremswunsch verlässlich ermittelt und anschließend mit sehr hoher Effizienz (vollständig oder teilweise) über den Generator umgesetzt werden. Der (nicht skizzierte) Generator kann beispielsweise an der Vorderachse angeordnet sein. Auf diese Weise ist eine Fahrzeugbatterie mittels des Generators aufladbar, ohne dass der von dem Fahrer vorgegebene Fahrerbremswunsch überschritten wird.

Sofern die aktuelle Generatorleistung diese Verzögerung nicht allein aufbringen kann, kann mittels eines Ansteuerns des stetig regelbaren Ventils 88 und der zweiten Pumpe 90 ein zusätzliches hydraulisches Bremsmoment in den beiden Radbremszylindern 54b aufgebaut werden, um der vom Fahrer vorgegebenen Wunschverzögerung zumindest teilweise zu entsprechen. Vorzugsweise kann in diesem Fall die Summe aus den hydraulischen Bremsmomenten und dem Generator-Bremsmoment gleich der vom Fahrer vorgegebenen Wunschverzögerung sein. Mittels des ersten Steuersignals 14 kann das stetig regelbare Ventil 88 gezielt so gesteuert/geschaltet werden, dass über ein Verschieben des aus dem Hauptbremszylinder 62 herausgedrückten Bremsflüssigkeitsvolumens über das zumindest teilgeöffnete stetig regelbare Ventil 88 in das Bremsmediumsreservoir 61 das bevorzugte hydraulische Bremsmoment der Radbremszylinder 54b vorliegt. Bezüglich der genauen Schaltstrategie wird auf die nachfolgend beschriebenen Verfahrensschritte verwiesen.

Der mittels des Ansteuerns des stetig regelbaren Ventils 88 durch das erste Steuersignal 14 bewirkbare "hydraulische Leerweg" gewährleistet somit die Vorteile eines "mechanischen" Leerwegs. Somit ist es nicht notwendig, einen "mechanischen" Leerweg an dem Hauptbremszylinder 62, an dem Bremskraftverstärker 68 oder an dem Bremsbetätigungselement 64 auszubilden.

Das mit der Steuervorrichtung 100 ausgestattete Bremssystem kann insbesondere auch die nachfolgend beschriebenen Verfahrensschritte ausführen. Bezüglich der Ausführung dieser Verfahrensschritte und ihre Vorteile wird deshalb auf die Beschreibung der weiteren Figuren verwiesen.

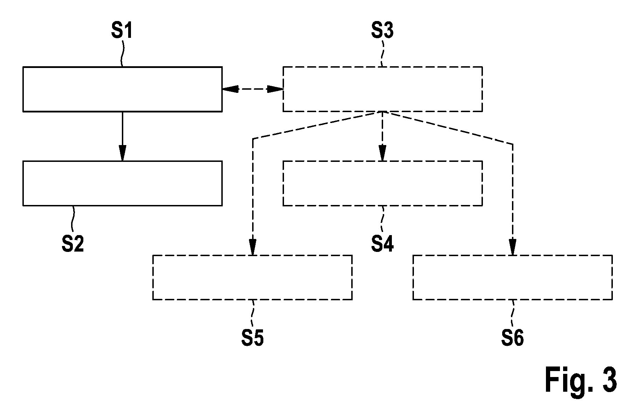

Fig. 3 zeigt ein Flussdiagramm zum Darstellen einer ersten Ausführungsform des Verfahrens.

Das in Fig. 3 wiedergegebene Verfahren ist beispielsweise mittels der oben beschriebenen Steuervorrichtung, bzw. dem damit ausgestatteten Bremssystem, ausführbar. Die Ausführbarkeit des Verfahrens ist jedoch nicht auf die Verwendung dieser Steuervorrichtung oder des damit ausgestatteten Bremssystems limitiert.

In einem Verfahrensschritt S1 wird ein erster Soll-Zustand eines ersten Ventils des Bremssystems unter Berücksichtigung einer Generator-Bremsmoment-Größe bezüglich eines aktuell ausgeübten oder auszuübenden Generator-Bremsmoments eines Generators festgelegt. Das erste Ventil ist derart mit einem Hauptbremszylinder des Bremssystems und mit einer Flüssigkeitsspeichervorrichtung des Bremssystems verbunden, dass ein Bremsflüssigkeitsvolumen aus dem Hauptbremszylinder über das in einem zumindest teilgeöffneten Zustand gesteuerte erste Ventil in die Flüssigkeitsspeichervorrichtung verschiebbar ist. Das erste Ventil kann insbesondere ein stetig regelbares/steuerbares/stellbares Ventil sein. Das hier beschriebene Verfahren ist jedoch nicht auf die Verwendung eines stetig regelbaren Ventils als erstes Ventil limitiert.

Als Flüssigkeitsspeichervorrichtung ist das erste Ventil zumindest über eine Saugleitung mit einem Bremsmediumreservoir des Bremssystems verbunden. Genauere Beschreibungen zu der Ausbildbarkeit des Bremsmediumreservoirs sind oben schon beschrieben.

Beispielsweise kann in dem Verfahrensschritt S1 die Generator-Bremsmoment-Größe mit einer vorgegebenen Mindest-Bremsmoment-Größe verglichen werden. Sofern die Generator-Bremsmoment-Größe über der Mindest-Bremsmoment-Größe liegt, wird vorzugsweise das erste Ventil so in den zumindest teilgeöffneten Zustand gesteuert, dass ein aus dem Hauptbremszylinder herausgedrücktes Bremsflüssigkeitsvolumen über das in den zumindest teilgeöffneten Zustand gesteuerte erste Ventil in das Bremsmediumreservoir verschoben wird. Ebenso kann, sofern die Generator-Bremsmoment-Größe unter der Mindest-Bremsmoment-Größe liegt, das erste Ventil so in einen geschlossenen Zustand gesteuert werden, dass eine hydraulische Verbindung zwischen dem Hauptbremszylinder und dem Bremsmediumreservoir unterbunden wird.

In einem Verfahrensschritt S2 wird das erste Ventil unter Berücksichtigung des festgelegten ersten Soll-Zustands angesteuert. Beispielsweise kann durch das auf diese Weise in das Bremsmediumreservoir verschobene Bremsflüssigkeitsvolumen verhindert werden, dass das aus dem Hauptbremszylinder herausgedrückte Bremsflüssigkeitsvolumen zu einer Steigerung eines hydraulischen Bremsmoments mindestens eines Radbremszylinders beiträgt. Somit ist mittels des Ansteuerns des ersten Ventils ein "hydraulischer Leerweg" realisierbar, welcher verhindert, dass eine Betätigung eines an dem Hauptbremszylinder angeordneten Bremsbetätigungselements automatisch zu einer Steigerung des Bremsdrucks des mindestens einen Radbremszylinders des Bremssystems führt.

In einem optionalen Verfahrensschritt S3 kann unter Berücksichtigung einer Betätigungsstärke-Größe bezüglich einer Betätigungsstärke einer Betätigung eines Bremsbetätigungselements ein zweiter Soll-Zustand eines zweiten Ventils des Bremssystems festgelegt werden. Anstelle oder als Ergänzung zu der Betätigungsstärke-Größe können auch die Generator-Bremsmoment-Größe, der erste Soll-Zustand und/oder eine Generator-Einsetzinformation bezüglich mindestens eines ausführbaren Kann-Generator-Bremsmoments berücksichtigt werden. (Die Generator-Einsetzinformation wird beispielsweise von mindestens einem an dem Generator und/oder an einer mittels des Generators aufladbaren Batterie angeordneten Sensor und/oder einem Fahrzeugbus bereitgestellt.) Dabei wird der zweite Soll-Zustand festgelegt für ein als zweites Ventil eingesetztes Trennventil zwischen dem Hauptbremszylinder und einem Bremskreis des Bremssystems mit dem ersten Ventil und mindestens einem Radbremszylinder. In einem anschließenden Verfahrensschritt S4 wird dieses zweite Ventil als Trennventil unter Berücksichtigung des festgelegten zweiten Soll-Zustands angesteuert.

Vorzugsweise wird in dem Verfahrensschritt S3 die Betätigungsstärke-Größe mit einer Mindestbetätigungsstärke-Größe bezüglich einer Mindestbetätigungsstärke, ab welcher eine auf ein Bremsbetätigungselement aufgebrachte Fahrerbremskraft auf einen verstellbaren Hauptbremszylinder-Kolben des Hauptbremszylinders übertragen wird, verglichen. Sofern die Betätigungsstärke-Größe unter der Mindestbetätigungsstärke-Größe liegt, wird in diesem Fall das zweite Ventil so in einen zumindest teilgeöffneten Zustand gesteuert, dass ein aus dem Hauptbremszylinder herausgedrücktes Bremsflüssigkeitsvolumen über das in den zumindest teilgeöffneten Zustand gesteuerte zweite Ventil in den Bremskreis verschoben wird. Sofern die Betätigungsstärke-Größe die Mindestbetätigungsstärke-Größe überschreitet, kann das zweite Ventil so in einen geschlossenen Zustand gesteuert werden, dass eine hydraulische Verbindung zwischen dem Hauptbremszylinder und dem Bremskreis unterbunden wird.

Mittels der Verfahrensschritte S3 und S4 kann somit der Bremskreis mit dem ersten Ventil und dem mindestens einen Radbremszylinder wahlweise hydraulisch mit dem Hauptbremszylinder verbunden oder von diesem hydraulisch getrennt werden. Sofern der Bremskreis mit dem Hauptbremszylinder hydraulisch verbunden ist, kann der Fahrer direkt in diesen hineinbremsen. Demgegenüber kann der in einem hydraulisch entbundenen Bremskreis vorliegende Bremsdruck unabhängig von einem Druck in dem Hauptbremszylinder eingestellt werden. Das Einstellen des Bremsdrucks in dem Bremskreis kann insbesondere unter Verwendung des ersten Ventils erfolgen.

Bei der bevorzugten Ausführung des Verfahrensschritt S3 ist gewährleistet, dass der Bremskreis von dem Hauptbremszylinder hydraulisch entbunden wird, während der Fahrer aufgrund der (nahezu) unterbundenen Kraftübertragung zwischen dem Hauptbremszylinder und dem Bremsbetätigungselement keine dem Druck in dem Hauptbremszylinder entsprechende Gegenkraft bei der Betätigung des Bremsbetätigungselements spürt. Somit bemerkt der Fahrer auch nicht aufgrund eines geänderten Bremsbetätigungsgefühls (Pedalgefühls) die hydraulische Entkopplung/Abtrennung des Bremskreises von dem Hauptbremszylinder durch das Schließen des als Trennventils verwendeten zweiten Ventils.

Man kann diesen Vorteil auch so umschreiben, dass zum Verblenden eines Generator-Bremsmoments mittels des hydraulisch entkoppelbaren/abtrennbaren Bremskreises der Jump-In-Bereich genutzt wird, in welchem der Fahrer die Entkopplung/Abtrennung des Bremskreises nicht über eine geänderte Gegenkraft am Bremsbetätigungselement bemerkt.

Bevorzugter Weise kann, sofern die Betätigungsstärke-Größe bei zeitlicher Zunahme der Betätigungsstärke-Größe gegen die Mindestbetätigungsstärke-Größe geht, ein Verfahrensschritt S5 ausgeführt werden. In dem Verfahrensschritt S5 wird mittels einer Pumpe des Bremssystems ein Bremsflüssigkeitsvolumen aus dem Bremsmediumreservoir über das in den zumindest teilgeöffneten Zustand vorliegende zweite Ventil in den Hauptbremszylinder gepumpt.

Ebenso kann, sofern die Betätigungsstärke-Größe bei zeitlicher Abnahme der Betätigungsstärke-Größe gegen die Mindestbetätigungsstärke-Größe geht, ein Verfahrensschritt S6 ausgeführt werden. Das zweite Ventil wird in dem Verfahrensschritt S6 so in den zumindest teilgeöffneten Zustand gesteuert, dass ein Bremsflüssigkeitsvolumen aus dem Bremsmediumreservoir über das in den zumindest teilgeöffneten Zustand vorliegende zweite Ventil in den Hauptbremszylinder transferiert wird.

Die Vorteile eines Ausführens der Verfahrensschritte S5 und S6 werden anhand der nachfolgenden Koordinatensysteme genauer erläutert.

Die Bezeichnung der Verfahrensschritte S1 bis S6 legt keine zeitliche Reihenfolge zum Ausführen von diesen fest.

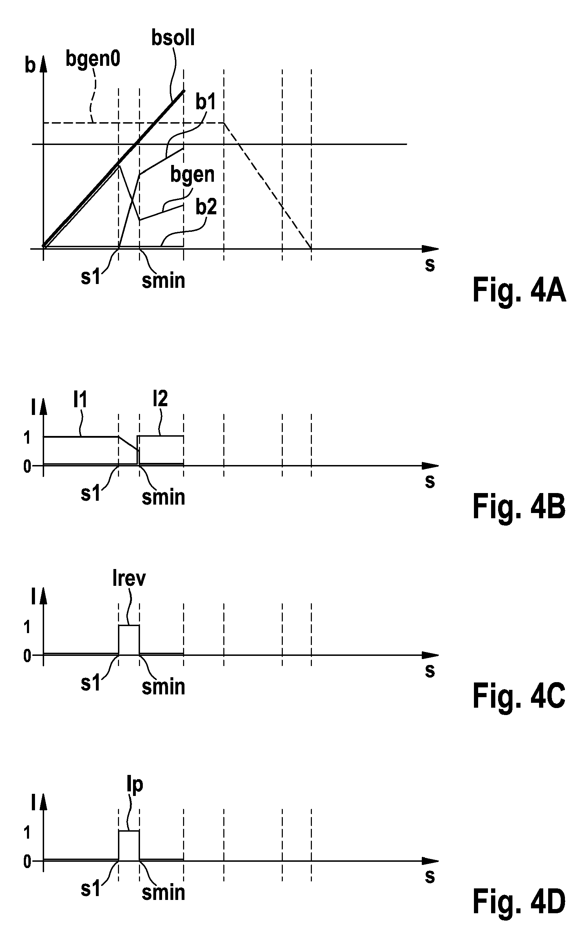

Fig. 4A bis 4D zeigen vier Koordinatensysteme zum Darstellen einer zweiten Ausführungsform des Verfahrens. Die Abszissen der Koordinatensysteme der Fig. 4A bis 4D geben einen Bremsbetätigungsweg s als Beispiel für eine Betätigungsstärke wieder. In Fig. 4A ist die Ordinate ein Bremsmoment b. Die Ordinaten der Fig. 4B bis 4D sind Stromstärken I von Versorgungsströmen/Steuerströmen, welche an verschiedene Komponenten des angesteuerten/betriebenen Bremssystems bereitgestellt werden.

Der besseren Anschaulichkeit wegen wird das im Weiteren ausgeführte Verfahren zum Betreiben des oben beschriebenen Bremssystems verwendet. Es wird darauf hingewiesen, dass die Ausführbarkeit des Verfahrens jedoch nicht auf die Verwendung des oben beschriebenen Bremssystems, bzw. der darin eingesetzten Steuervorrichtung, limitiert ist. Insbesondere kann anstelle des stetig regelbaren Ventils auch ein anderer Ventiltyp als erstes Ventil eingesetzt werden.

Das Verfahren wird ausgeführt, um zumindest bei einem Bremsbetätigungsweg s ungleich Null aber unter einem Mindestbremsweg smin, unter welchem eine Kraftübertragung zwischen dem Bremsbetätigungselement und dem Hauptbremszylinder (zumindest signifikant) unterbunden ist, eine Batterie mittels des Generators aufzuladen. Sofern ein Kann-Generator-Bremsmoment bgen0 ungleich Null ausführbar ist (siehe Fig. 4A), wird bei einem Bremsbetätigungsweg s kleiner als einem ersten Grenzweg s1, welcher kleiner oder gleich dem Mindestbremsweg smin ist, das als erstes Ventil angesteuerte stetig regelbare Ventil in einen zumindest teilgeöffneten Zustand gesteuert. Sofern das stetig regelbare erste Ventil als stromlos geschlossenes Ventil ausgebildet ist, wird dazu eine erste Stromstärke I1 ungleich Null an das erste Ventil bereitgestellt, wie in Fig. 4B gezeigt ist.

Zusätzlich wird das als Trennventil verwendete zweite Ventil bei einem Bremsbetätigungsweg s kleiner als einem ersten Grenzweg s1 ebenfalls in einen zumindest teilgeöffneten Zustand gesteuert. Vorzugsweise ist das zweite Ventil als stromlos geöffnetes Ventil ausgebildet. In diesem Fall kann eine zweite Stromstärke I2 gleich Null zum vorteilhaften Ansteuern des zweiten Ventils an dieses bereitgestellt werden.

Aufgrund der vorteilhaften Ansteuerung der beiden Ventile mittels der Stromstärken I1 und I2 verschiebt der Bremskraftverstärker während der Betätigung des Bremsbetätigungselements mit einem Bremsbetätigungsweg s kleiner als einem ersten Grenzweg s1 ein Bremsflüssigkeitsvolumen aus der mit dem zweiten Ventil verbundenen zweiten Druckkammer des Hauptbremszylinders über die angesteuerten Ventile in das Bremsmediumreservoir. Da das Losbrech-Moment der Radbremszylinder des abtrennbaren zweiten Bremskreises höher als der Druck in dem Bremsmediumreservoir ist, welcher in der Regel gleich dem Atmosphärendruck ist, wird keine Bremsflüssigkeit in die Radbremszylinder des zweiten Bremskreises verschoben. Somit ist es nicht notwendig, die Radeinlassventile des zweiten Bremskreises zu schließen. Bevorzugter Weise sind die Radeinlassventile des zweiten Bremskreises als stromlos offene Ventile ausgebildet. In diesem Fall kann bei einem Bremsbetätigungsweg s kleiner als einem ersten Grenzweg s1 eine Radeinlassventil-Stromstärke Irev gleich Null an diese bereitgestellt werden, wie in Fig. 4C gezeigt ist. Da eine Funktion der Pumpe des abtrennbaren Bremskreises bei einem Bremsbetätigungsweg s unter dem ersten Grenzweg s1 nicht benötigt wird, kann auch die an die Pumpe bereitgestellte Pump-Stromstärke Ip gleich Null sein (siehe Fig. 4D).

Über die oben schon beschriebene vorteilhafte Ausbildung des Hauptbremszylinders ist gleichzeitig gewährleistbar, dass der Schwimmkolben bei einem Bremsbetätigungsweg s unter dem ersten Grenzweg s1 so verstellt wird, dass in der mit dem nicht-entkoppelbaren ersten Bremskreis hydraulisch verbundenen ersten Druckkammer des Hauptbremszylinders kein Druck aufgebaut wird. Dazu wird der Schwimmkolben in Richtung der zweiten Druckkammer verschoben. Somit ist bewirkbar, dass in die der ersten Druckkammer des Hauptbremszylinders zugeordneten Radbremszylinder des ersten Bremskreises kein Bremsflüssigkeitsvolumen verschoben wird.

Bei einem Bremsbetätigungsweg s zwischen Null und dem ersten Grenzweg s1 sind das Bremsmoment b1 der Radbremszylinder des ersten Bremskreises (des nicht-abtrennbaren/nicht-entkoppelbaren Bremskreises) und das Bremsmoment b2 der Radbremszylinder des zweiten Bremskreises (des abtrennbaren/entkoppelbaren Bremskreises) trotz geöffneter Radeinlassventile auf Werte gleich Null einstellbar, wie in Fig. 4A zu erkennen ist. Außerdem kann bei einem Bremsbetätigungsweg s zwischen Null und dem ersten Grenzweg s1 mittels eines Sensors und einer Auswerteeinrichtung ein dem Bremsbetätigungsweg s entsprechendes Soll-Gesamtbremsmoment bsoll festgelegt werden. Sofern das Kann-Generator-Bremsmoment bgen0 dies zulässt, kann der Generator dazu angesteuert werden, ein dem Soll-Gesamtbremsmoment bsoll entsprechendes Generator-Bremsmoment bgen (regeneratives Bremsmoment) auszuüben. (Das Kann-Generator-Bremsmoment bgen0 wird beispielsweise von mindestens einem an dem Generator und/oder an einer mittels des Generators aufladbaren Batterie angeordneten Sensor und/oder einem Fahrzeugbus bereitgestellt.)

Das vom Fahrer angeforderte Soll-Gesamtbremsmoment bsoll wird in diesem Fall zu 100% als Generator-Bremsmoment bgen aufgebracht. Beispielsweise kann der Generator das Generator-Bremsmoment bgen an einer dem nicht-abtrennbaren ersten Bremskreis zugeordneten Achse, wie insbesondere der Vorderachse, aufbringen.

Ab dem ersten Grenzweg s1 nähert sich der Bremsbetätigungsweg s bei zeitlicher Zunahme dem Mindestbremsweg smin. In dieser Situation kann das Bremssystem auf ein baldiges Verlassen des Jump-In-Bereichs vorbereitet werden. Damit das Verlassen des Jump-In-Bereichs für den Fahrer mit einem standardgemäßen Pedalgefühl verbunden ist, wird der Bremsdruck in dem nicht-abtrennbaren ersten Bremskreis auf einem dem Mindestbremsweg smin entsprechenden Wert eingestellt. Für ein weiteres Betreiben des Generators zum Aufladen der Batterie kann das zweite hydraulische Bremsmoment b2 des abtrennbaren zweiten Bremskreises gleichzeitig gleich Null gehalten werden. Dazu werden die Radeinlassventile des zweiten Bremskreises geschlossen. Dies kann durch ein Bereitstellen einer Radeinlassventil-Stromstärke Irev ungleich Null erfolgen.

Zum Einstellen eines gewünschten Bremsdrucks in dem nicht-abtrennbaren ersten Bremskreis wird die zweite Pumpe des zweiten Bremskreises mit einem Pump-Versorgungsstrom Ip ungleich Null angesteuert. Bei einem geöffneten zweiten Ventil wird auf diese Weise mittels der zweiten Pumpe ein Bremsflüssigkeitsvolumen aus dem Bremsmediumreservoir über die Saugleitung und das geöffnete zweite Ventil in die zweite Druckkammer des Hauptbremszylinders gefördert. Mittels des ersten Ventils, d. h. mittels einer variierenden ersten Stromstärke I1, kann der Druck in der zweiten Druckkammer des Hauptbremszylinders so eingestellt werden, dass mittels einer Verschiebung des Schwimmkolbens teilweise aus der zweiten Druckkammer hinein in die erste Druckkammer der gewünschte Druck in der ersten Druckkammer vorliegt. Mittels des ersten Ventils wird somit der Bremsdruck in dem nicht-entkoppelbaren ersten Bremskreis so eingestellt, dass das gewünschte hydraulische Bremsmoment b1 ungleich Null der Radbremszylinder des ersten Bremskreises vorliegt. Ziel dieser Ansteuerung ist es, beim Erreichen des Jump-Ins (der Grenze des Jump-In-Bereichs) ein dem gewünschten ersten hydraulischen Bremsmoment b1 entsprechendes Bremsflüssigkeitsvolumen in den ersten Bremskreis zu fördern. Es wird noch einmal darauf hingewiesen, dass dieses Volumen aus dem Bremsmediumreservoir angesaugt wird und über das offene zweite Ventil in die zweite Druckkammer des Hauptbremszylinders gefördert wird.

Während das erste hydraulische Bremsmoment b1 ab dem ersten Grenzweg s1 zunimmt, erfolgt kein Druckaufbau in den Radbremszylindern des abtrennbaren zweiten Bremskreises aufgrund der geschlossenen Radeinlassventile des zweiten Bremskreises. Das zweite hydraulische Bremsmoment b2 der Radbremszylinder des zweiten Bremskreises bleibt somit gleich Null (siehe Fig. 4A).

Gleichzeitig kann das Generator-Bremsmoment bgen entsprechend der zeitlichen Zunahme des ersten hydraulischen Bremsmoments b1 zurückgenommen/zurückgefahren werden. Somit ist auch bei einem Bremsbetätigungsweg s zwischen dem ersten Bremsbetätigungsweg s1 und dem Mindestbremsweg smin ein dem Bremsbetätigungsweg s entsprechendes Soll-Gesamtbremsmoment bsoll einhaltbar.

Ab einem Bremsbetätigungsweg s gleich dem Mindestbremsweg smin wird das zweite Ventil mittels eines Versorgungsstroms mit einer zweiten Stromstärke I2 ungleich Null geschlossen. Der zweite Bremskreis ist somit ab einem Bremsbetätigungsweg s gleich dem Mindestbremsweg smin von dem Hauptbremszylinder hydraulisch abgetrennt/entkoppelt. Man kann dies auch so umschreiben, dass das Bremssystem sich nun im Brake-by-wire-Modus befindet. Der Fahrer hat jedoch bei einer zeitlichen Zunahme des Bremsbetätigungswegs s weiterhin die Möglichkeit, direkt in den ersten Bremskreis einzubremsen und auf diese Weise das erste hydraulische Bremsmoment b1 zu steigern. Auch das Generator-Bremsmoment bgen kann entsprechend einem gewünschten Soll-Gesamtbremsmoment bsoll gesteigert werden, sofern das Kann-Generator-Bremsmoment bgen0 dies zulässt. Somit kann auch außerhalb des Jump-In-Bereichs regenerativ gebremst und verblendet werden. Dies kann in einer Strategie entsprechend der installierten Bremskraftverteilung erfolgen. Alternativ sind natürlich auch andere Strategien der Bremskraftverteilung denkbar, z. B. eine theoretische Überbremsung der Achse des entkoppelbaren zweiten Bremskreises zur Erhöhung der rekuperativen Effizienz.

Das zweite hydraulische Bremsmoment b2 des zweiten Bremskreises kann konstant gleich Null gehalten werden. Dazu können das erste Ventil geschlossen und die Radeinlassventile geöffnet werden, indem Stromstärken I1 und Irev gleich Null an diese bereitgestellt werden. Da eine Funktion der zweiten Pumpe in diesem Systemzustand nicht erforderlich ist, kann die Pump-Stromstärke Ip ebenfalls gleich Null eingestellt werden.

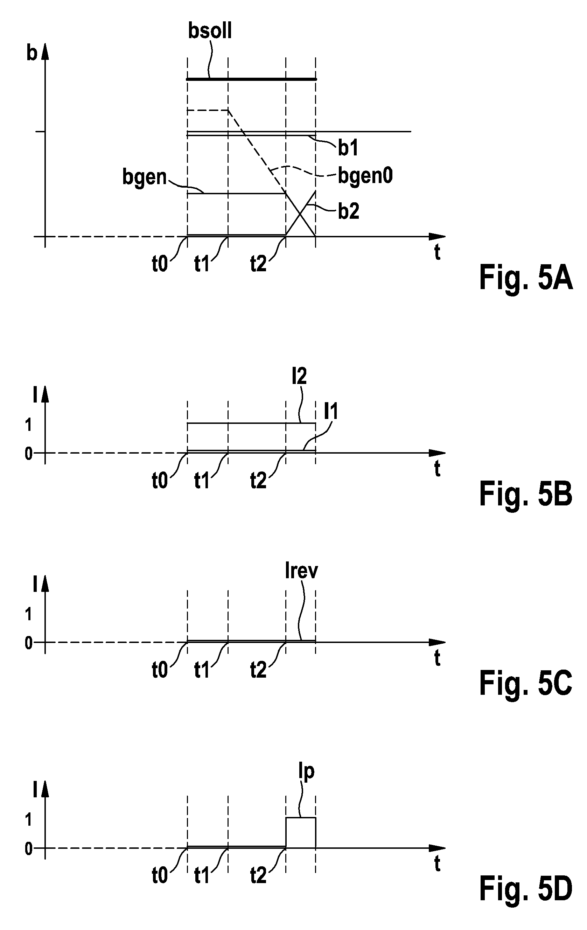

Fig. 5A bis 5D zeigen vier Koordinatensysteme zum Erläutern einer dritten Ausführungsform des Verfahrens. Die Abszisse der Koordinatensysteme der Fig. 5A bis 5D ist die Zeitachse t. Die Ordinate der Fig. 5A entspricht einem Bremsmoment b. Die Ordinaten der Fig. 5B bis 5D sind Stromstärken I von Versorgungsströmen, welche an die oben bereits aufgezählten Komponenten des betriebenen Bremssystems bereitgestellt werden.

Während des dargestellten Verfahrens bremst der Fahrer mit einem (konstanten) Bremsbetätigungsweg s größer als dem Mindestbremsweg smin. Das Verfahren der Fig. 5A bis 5D kann beispielsweise nach dem zuvor beschriebenen Verfahren ausgeführt werden.

Bis zu einer Zeit t2 ist das ausführbare Kann-Generator-Bremsmoment bgen0 größer als das ausgeführte Generator-Bremsmoment bgen. Somit können zwischen den Zeiten t0 bis t2 die am Ende des Verfahrens der zuvor beschriebenen Figuren eingestellten Werte für das Soll-Gesamtbremsmoment bsoll, das Generator-Bremsmoment bgen, das erste hydraulische Bremsmoment b1, das zweite hydraulische Bremsmoment b2, die erste Stromstärke I1, die zweite Stromstärke I2, die Radeinlassventil-Stromstärke Irev und die Pump-Stromstärke Ip beibehalten werden.

Ab der Zeit t1 nimmt das Kann-Generator-Bremsmoments bgen0 zeitlich ab. Die zeitliche Abnahme des Kann-Generator-Bremsmoments bgen0 kann beispielsweise darauf zurückzuführen sein, dass das Fahrzeug nur noch eine geringe Geschwindigkeit hat und/oder die aufladbare Batterie bereits fast vollständig aufgeladen ist. Beide Faktoren erlauben lediglich ein begrenztes Generator-Bremsmoment bgen.

Von der Zeit t0 an ist das zuvor eingestellte Generator-Bremsmoment bgen aufgrund der zeitlichen Abnahme des Kann-Generator-Bremsmoments bgen0 nicht mehr ausführbar. Das dem (konstanten) Bremsbetätigungsweg s entsprechende Soll-Gesamtbremsmoment bsoll ist jedoch trotz der starken zeitlichen Abnahme des Generator-Bremsmoments bgen verlässlich einhaltbar. Dazu kann über einen hydraulischen Druckaufbau in dem entkoppelbaren zweiten Bremskreis das zweite hydraulische Bremsmoment b2 gesteigert werden. Die zeitliche Abnahme des Kann-Generator-Bremsmoments ist somit für den Fahrer nicht mit einer Komforteinbuße verbunden.

Der Druckaufbau in dem zweiten Bremskreis ist über ein Ansteuern der zweiten Pumpe mit einer Pump-Stromstärke Ip ungleich Null ausführbar. Während des Druckaufbaus bleiben das erste Ventil und das zweite Ventil geschlossen und die Radeinlassventile des entkoppelbaren zweiten Bremskreises geöffnet. Dazu werden eine erste Stromstärke I1 gleich Null an das erste Ventil, eine zweite Stromstärke I2 ungleich Null an das zweite Ventil und eine Radeinlassventil-Stromstärke Irev gleich Null an die Radeinlassventile bereitgestellt.

Idealerweise erfolgt der Druckaufbau in dem zweiten Bremskreis entsprechend der installierten Bremskraftverteilung, da dann identische Verhältnisse zum Standardsystem vorherrschen. Andere Strategien sind jedoch ebenfalls denkbar, z. B. kann eine Überbremsung der Achse des zweiten Bremskreises zum Steigern der rekuperativen Effizienz vorgesehen sein.

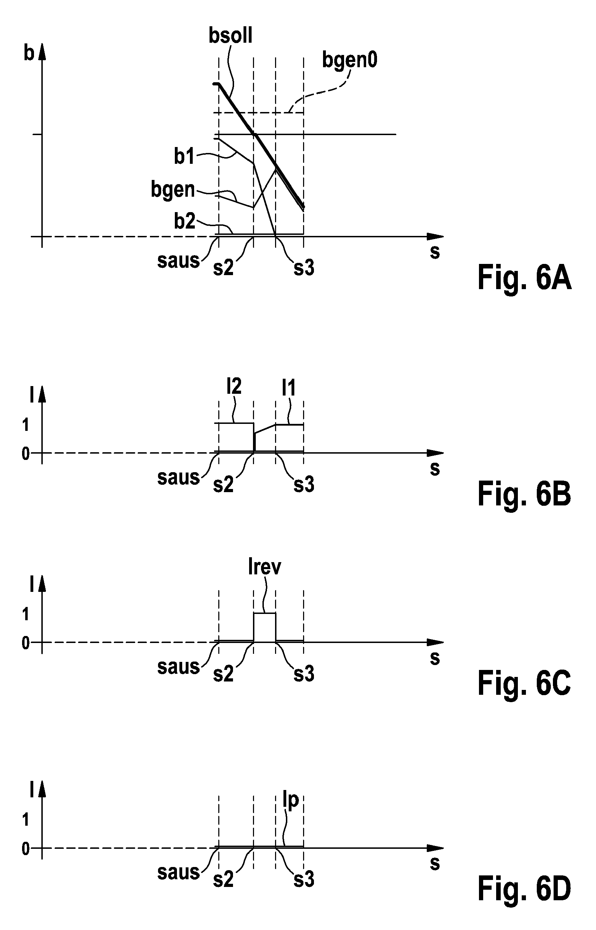

Fig. 6A bis 6D zeigen vier Koordinatensysteme zum Erläutern einer vierten Ausführungsform des Verfahrens. Die Abszissen der Koordinatensysteme der Fig. 6A bis 6D geben einen Bremsbetätigungsweg s wieder. In Fig. 6A ist die Ordinate ein Bremsmoment b. Die Ordinaten der Fig. 6B bis 6D sind Stromstärken I von Versorgungsströmen, welche an dieKomponenten des betriebenen Bremssystems bereitgestellt werden.

Bei dem anhand der Fig. 6A bis 6D schematisch wiedergegebenen Verfahren nimmt der Bremsbetätigungsweg s ausgehend von einem Ausgangsbremsweg saus größer als dem Mindestbremsweg smin zeitlich konstant ab. Das hier beschriebene Verfahren ist beispielsweise nach mindestens einem der zuvor beschriebenen Verfahren ausführbar. Zu Beginn des Verfahrens können die Werte für das Soll-Gesamtbremsmoment bsoll, das Generator-Bremsmoment bgen, das erste hydraulische Bremsmoment b1, das zweite hydraulische Bremsmoment b2, die erste Stromstärke I1, die zweite Stromstärke I2, die Radeinlassventil-Stromstärke Irev und die Pump-Stromstärke Ip gleich den Endwerten des Verfahrens der Fig. 4A bis 4D sein.

Mit der zeitlichen Abnahme des Bremsbetätigungswegs s wird auch ein zeitlich abnehmendes Soll-Gesamtbremsmoment bsoll festgelegt. Aufgrund des abnehmenden Bremsbetätigungsweges s nimmt auch das erste hydraulische Bremsmoment b1 des nicht-entkoppelbaren ersten Bremskreises, in welchem der Fahrer direkt einbremst, zeitlich ab. Gleichzeitig kann der Generator so angesteuert werden, dass mittels einer zeitlichen Abnahme des Generator-Bremsmoments bgen das gewünschte Soll-Gesamtbremsmoment bsoll verlässlich eingehalten wird. Gleichzeitig kann das zweite hydraulische Bremsmoment b2 der Radbremszylinder des zweiten Bremskreises, welcher von dem Hauptbremszylinder hydraulisch abgetrennt/entkoppelt ist, einen Wert von Null aufweisen. Das erste Ventil und das zweite Ventil können aufgrund einer ersten Stromstärke I1 gleich Null und einer zweiten Stromstärke 12 ungleich Null im geschlossenen Zustand vorliegen. Die Radeinlassventile des entkoppelbaren zweiten Bremskreises können mittels einer Radeinlassventil-Stromstärke Irev gleich Null in den geöffneten Zustand gesteuert sein. Da eine Funktion der zweiten Pumpe des entkoppelbaren zweiten Bremskreises bei einem zeitlich abnehmenden Bremsbetätigungsweg s zwischen dem Ausgangsbremsweg saus und einem zweiten Grenzweg s2 nicht nötig ist, kann die Pump-Stromstärke Ip in diesem Fall gleich Null sein.

Ab einem Bremsbetätigungsweg s gleich dem zweiten Grenzweg s2, welcher vorzugsweise gleich dem Mindestbremsweg smin ist, wird das Generator-Bremsmoment bgen auf einen Wert entsprechend des (theoretischen) Bremsmoments des entkoppelbaren zweiten Bremskreises eingestellt. Auf diese Weise ist sicherstellbar, dass trotz einer Verblendung immer wieder auf die vordefinierte hydraulische Bremskraftverteilung zurückgefahren werden kann.

Während der Zunahme des Generator-Bremsmoments bgen wird das erste hydraulische Bremsmoment b1 des nicht-entkoppelbaren ersten Bremskreises reduziert. Dies erfolgt über eine Volumenverschiebung aus dem Hauptbremszylinder über den entkoppelbaren zweiten Bremskreis in das Bremsmediumreservoir. Dazu wird das zweite Ventil mittels einer zweiten Stromstärke 12 gleich Null geöffnet. Mittels eines Ansteuerns des ersten Ventils mit einer variierenden Stromstärke I1 ungleich Null kann ein Bremsflüssigkeitsvolumen aus der zweiten Druckkammer des Hauptbremszylinders über das geöffnete zweite Ventil und das zumindest teilgeöffnete erste Ventil in das Bremsmediumreservoir verschoben werden. Dabei verstellt sich auch der Schwimmkolben von der ersten Druckkammer weg in Richtung der zweiten Druckkammer des Hauptbremszylinders. Die auf diese Weise bewirkte Vergrößerung der ersten Druckkammer führt zu einem Druckabbau in dem nicht-entkoppelbaren ersten Bremskreis und damit zu einer Reduzierung des ersten hydraulischen Bremsmoments b1 der Radbremszylinder des ersten Bremskreises.

Während der in dem vorausgehenden Absatz beschriebenen Vorgehensweise können die Radeinlassventile des zweiten Bremskreises mittels einer Radeinlassventil-Stromstärke Irev ungleich Null geschlossen werden, um das zweite hydraulische Bremsmoments b2 der Radbremszylinder des zweiten Bremskreises trotz der Verschiebung des Bremsflüssigkeitsvolumens gleich Null zu halten. Da ein Einsatz der zweiten Pumpe des entkoppelbaren zweiten Bremskreises zum Verschieben des Bremsflüssigkeitsvolumens nicht nötig ist, kann die Pump-Stromstärke Ip gleich Null bleiben.

Ab einem Bremsbetätigungsweg s3, welcher insbesondere kleiner als der Mindestbremsweg s sein kann, liegt ein erstes hydraulisches Bremsmoment b1 gleich Null vor. Entsprechend der weiteren zeitlichen Abnahme des Bremsbetätigungswegs s kann ein zeitlich reduziertes Soll-Gesamtbremsmoment bsoll festgelegt werden, welches, sofern das Kann-Generator-Bremsmoment bgen0 dies zulässt, lediglich durch ein Generator-Bremsmoment bgen gleich dem Soll-Gesamtbremsmoment bsoll aufgebracht wird. Somit ist ein vorteilhaft schnelles Aufladen der aufladbaren Batterie auch bei einer Bremsbetätigung mit einem vergleichsweise geringen, zeitlich abnehmenden Bremsbetätigungsweg s gewährleistbar.

Die hydraulischen Bremsmomente b1 und b2 können gleich Null gehalten werden. Die mit der zeitlichen Abnahme des Bremsbetätigungswegs s verbundene Vergrößerung der zweiten Druckkammer kann über ein Ansaugen eines Bremsflüssigkeitsvolumens aus dem Bremsmediumreservoir ausgeglichen werden, ohne dass sich ein Bremsdruck in den Radbremszylindern des entkoppelbaren zweiten Bremskreises aufbaut. Die Radeinlassventile des entkoppelbaren zweiten Bremskreises können dabei auch geöffnet vorliegen. Das erste Ventil kann mittels eines Versorgungsstroms mit einer maximalen ersten Stromstärke I1 zum Ansaugen des Bremsflüssigkeitsvolumens vollständig geöffnet werden.

Man kann die anhand der Fig. 6A bis 6D wiedergegebene Vorgehensweise auch so umschreiben, dass am Jump-In die Einlassventile des zweiten Bremskreises geschlossen und das Trennventil geöffnet werden. Durch einen Regelbetrieb des ersten Ventils kann bis zu dem dritten Grenzweg s3 Volumen aus dem ersten Bremskreis über eine Verschiebung des Schwimmkolbens zwischen den beiden Druckkammern des Hauptbremszylinders in das Bremsmediumreservoir zurückgeschoben werden. Das wegfallende erste hydraulische Bremsmoment b1 wird parallel durch eine Zunahme des Generator-Bremsmoments bgen kompensiert. Durch das Schließen der Radeinlassventile des entkoppelbaren zweiten Bremskreises kann ein Bremsdruckaufbau in den Radbremszylinders des zweiten Bremskreises vermieden. Durch diese Strategie herrscht ab einem Bremsbetätigungsweg gleich dem dritten Bremsbetätigungsweg s3 der Ausgangszustand eines Bremsens innerhalb des Jump-In-Bereichs vor.

Die vorausgehend beschriebenen Verfahren sind auch bei einem Fahrzeug mit einem Generator an der Hinterachse, an der entkoppelbaren Achse oder bei einem Fahrzeug, bei welchem der Generator auf alle vier Räder wirkt, anwendbar. Insbesondere bei einer Ausstattung des Fahrzeugs mit einem Generator an der entkoppelbaren Achse lassen sich auch die Strategie eines "Überbremsens der entkoppelbaren Achse", insbesondere der Hinterachse, anwenden, was zu einer Erhöhung der rekuperativen Effizienz beiträgt. Durch eine entsprechende Schaltung der Einlassventile kann der hydraulische Druckaufbau zum Verblenden an der Vorderachse, an der Hinterachse, aber auch an allen Achsen gleichzeitig durchgeführt werden.

## Patentansprüche

1. Steuervorrichtung (100) für ein Bremssystem eines Fahrzeugs mit
einer Ventilsteuereinrichtung (10), welche dazu ausgelegt ist, zumindest unter Berücksichtigung eines bereitgestellten Informationssignals (12) bezüglich eines aktuell ausgeübten oder auszuübenden Generator-Bremsmoments (bgen) eines Generators einen ersten Soll-Zustand eines ersten Ventils (88) des Bremssystems, welches derart mit einem Hauptbremszylinder (62) des Bremssystems und mit einer Flüssigkeitspeichervorrichtung des Bremssystems verbunden ist, dass ein Bremsflüssigkeitsvolumen aus dem Hauptbremszylinder (62) über das in einen zumindest teilgeöffneten Zustand gesteuerte erste Ventil (88) in die Flüssigkeitspeichervorrichtung verschiebbar ist, festzulegen, und ein dem ersten Soll-Zustand entsprechendes erstes Steuersignal (14, 12) an das erste Ventil (88) auszugeben;
wobei mittels der Ventilsteuereinrichtung (10) der erste Soll-Zustand für ein über zumindest eine Saugleitung (89) mit einem Bremsmediumreservoir (61) des Bremssystems als Flüssigkeitspeichervorrichtung verbundenes Ventil (88) als erstes Ventil (88) festlegbar ist; und
wobei die Ventilsteuereinrichtung (10) zusätzlich dazu ausgelegt ist, unter Berücksichtigung eines ersten Sensorsignals (16a) bezüglich einer Betätigungsstärke (s) einer Betätigung eines Bremsbetätigungselements (64) des Bremssystems, des Informationssignals (12) und/oder des ersten Soll-Zustands einen zweiten Soll-Zustand eines zweiten Ventils (86) des Bremssystems, welches als Trennventil (86) zwischen dem Hauptbremszylinder (62) und einem Bremskreis (52) des Bremssystems mit dem ersten Ventil (88) und mindestens einem Radbremszylinder (54b) angeordnet ist, festzulegen, und ein dem zweiten Soll-Zustand entsprechendes zweites Steuersignals (18, 12) an das zweite Ventil (86) auszugeben;
**dadurch gekennzeichnet, dass**
die Ventilsteuereinrichtung (10) zusätzlich dazu ausgelegt ist, das erste Sensorsignal (16a) mit einem vorgegebenen Vergleichssignal bezüglich einer Mindestbetätigungsstärke (smin), ab welcher eine auf das Bremsbetätigungselement (64) aufgebrachte Fahrerbremskraft (Fb) auf einen verstellbaren Hauptbremszylinder-Kolben (63) des Hauptbremszylinders (62) übertragbar ist, zu vergleichen, und, sofern das erste Sensorsignal (16a) unter dem Vergleichssignal liegt, das zweite Ventil (86) so in einen zumindest teilgeöffneten Zustand zu steuern, dass ein aus dem Hauptbremszylinder (62) heraus gedrücktes Bremsflüssigkeitsvolumen über das in den zumindest teilgeöffneten Zustand gesteuerte zweite Ventil (86) in den Bremskreis (52) verschiebbar ist, oder, sofern das erste Sensorsignal (16a) das Vergleichssignal übersteigt, das zweite Ventil (86) so in einen geschlossenen Zustand zu steuern, dass eine hydraulische , Verbindung zwischen dem Hauptbremszylinder (62) und dem Bremskreis (52) unterbunden ist.

2. Steuervorrichtung (100) nach Anspruch 1, wobei die Steuervorrichtung (100) eine Pumpensteuereinrichtung (20) umfasst, welche dazu ausgelegt ist, sofern das erste Sensorsignal (16a) bei zeitlicher Zunahme der Betätigungsstärke (s) sich dem Vergleichssignal annähert, ein Pumpsteuersignal (22) an eine Pumpe (90) des Bremssystems auszugeben, durch welches die Pumpe (90) dazu ansteuerbar ist, ein Bremsflüssigkeitsvolumen aus dem Bremsmediumreservoir (61) über das in den zumindest teilgeöffneten Zustand vorliegende zweite Ventil (86) in den Hauptbremszylinder (62) zu pumpen.

3. Steuervorrichtung (100) nach Anspruch 1 oder 2, wobei die Steuervorrichtung (100) eine Generatorsteuereinrichtung (24)umfasst, mittels welcher das auszuübende Generator-Bremsmoment (bgen) des Generators unter Berücksichtigung des ersten Sensorsignals (16a) und/oder eines zweiten Sensor- und/oder Informationssignals (16b) bezüglich mindestens eines ausführbaren Kann-Generator-Bremsmoments (bgen0) festlegbar ist und ein dem festgelegten auszuübenden Generator-Bremsmoment (bgen) entsprechendes Generatorsteuersignal (26) an den Generator ausgebbar ist.

4. Bremssystem für ein Fahrzeug mit einer Steuervorrichtung (100) nach einem der vorhergehenden Ansprüche.

5. Verfahren zum Betreiben eines Bremssystems eines Fahrzeugs mit den Schritten:
Festlegen eines ersten Soll-Zustands eines ersten Ventils (88) des Bremssystems, welches derart mit einem Hauptbremszylinder (62) des Bremssystems und mit einer Flüssigkeitspeichervorrichtung des Bremssystems verbunden ist, dass ein Bremsflüssigkeitsvolumen aus dem Hauptbremszylinder (62) über das in einen zumindest teilgeöffneten Zustand gesteuerte erste Ventil (88) in die Flüssigkeitspeichervorrichtung verschiebbar ist, unter Berücksichtigung einer Generator-Bremsmoment-Größe bezüglich eines aktuell ausgeübten oder auszuübenden Generator-Bremsmoments (bgen) eines Generators, wobei der erste Soll-Zustand für ein über zumindest eine Saugleitung (89) mit einem Bremsmediumreservoir (61) des Bremssystems als Flüssigkeitspeichervorrichtung verbundenes Ventil (88) als erstes Ventil (88) festgelegt wird (S1); und
Ansteuern des ersten Ventils (88) unter Berücksichtigung des festgelegten ersten Soll-Zustands (S2);
wobei unter Berücksichtigung einer Betätigungsstärke-Größe bezüglich einer Betätigungsstärke (s) einer Betätigung eines Bremsbetätigungselements (64) des Bremssystems, der Generator-Bremsmoment-Größe und/oder des ersten Soll-Zustands ein zweiter Soll-Zustand eines zweiten Ventils (86) des Bremssystems, welches als Trennventil (86) zwischen dem Hauptbremszylinder (62) und einem Bremskreis (52) des Bremssystems mit dem ersten Ventil (88) und mindestens einem Radbremszylinder (54b) angeordnet ist, festgelegt (S3) und das zweite Ventil (86) unter Berücksichtigung des festgelegten zweiten Soll-Zustands angesteuert wird (S4);
**dadurch gekennzeichnet, dass**
die Betätigungsstärke-Größe mit einer Mindestbetätigungsstärke-Größe bezüglich einer Mindestbetätigungsstärke (smin), ab welcher eine auf ein Bremsbetätigungselement (64) aufgebrachte Fahrerbremskraft (Fb) auf einen verstellbaren Hauptbremszylinder-Kolben (63) des Hauptbremszylinders (62) übertragen wird, verglichen wird, und, sofern die Betätigungsstärke-Größe unter der Mindestbetätigungsstärke-Größe liegt, das zweite Ventil (86) so in einen zumindest teilgeöffneten Zustand gesteuert wird, dass ein aus dem Hauptbremszylinder (62) heraus gedrücktes Bremsflüssigkeitsvolumen über das in den zumindest teilgeöffneten Zustand gesteuerte zweite Ventil (86) in den Bremskreis (52) verschoben wird, oder, sofern die Betätigungsstärke-Größe die Mindestbetätigungsstärke-Größe überschreitet, das zweite Ventil (86) so in einen geschlossenen Zustand gesteuert wird, dass eine hydraulische Verbindung zwischen dem Hauptbremszylinder (62) und dem Bremskreis (52) unterbunden wird.

6. Verfahren nach Anspruch 5, wobei die Generator-Bremsmoment-Größe mit einer vorgegebenen Mindest-Bremsmoment-Größe verglichen wird, und, sofern die Generator-Bremsmoment-Größe über der Mindest-Bremsmoment-Größe liegt, das erste Ventil (88) so in den zumindest teilgeöffneten Zustand gesteuert wird, dass ein aus dem Hauptbremszylinder (62) heraus gedrücktes Bremsflüssigkeitsvolumen über das in den zumindest teilgeöffneten Zustand gesteuerte erste Ventil (88) in das Bremsmediumreservoir (61) verschoben wird, oder, sofern die Generator-Bremsmoment-Größe unter der Mindest-Bremsmoment-Größe liegt, das erste Ventil (88) so in einen geschlossenen Zustand gesteuert wird, dass eine hydraulische Verbindung zwischen dem Hauptbremszylinder (62) und dem Bremsmediumreservoir (61) unterbunden wird.

7. Verfahren nach Anspruch 5 oder 6, wobei, sofern die Betätigungsstärke-Größe bei zeitlicher Zunahme der Betätigungsstärke-Größe gegen die Mindestbetätigungsstärke-Größe geht, mittels einer Pumpe (90) des Bremssystems ein Bremsflüssigkeitsvolumen aus dem Bremsmediumreservoir (61) über das in den zumindest teilgeöffneten Zustand vorliegende zweite Ventil (86) in den Hauptbremszylinder (62) gepumpt wird (S5).

8. Verfahren nacheinem der Ansprüche 5 bis 7, wobei, sofern die Betätigungsstärke-Größe bei zeitlicher Abnahme der Betätigungsstärke-Größe gegen die Mindestbetätigungsstärke-Größe geht, das zweite Ventil (86) so in den zumindest teilgeöffneten Zustand gesteuert wird, dass ein Bremsflüssigkeitsvolumen aus dem Bremsmediumreservoir (61) über das in den zumindest teilgeöffneten Zustand vorliegende zweite Ventil (86) in den Hauptbremszylinder (62) transferiert wird (S6).

## Claims

1. Control device (100) for a brake system of a vehicle, having
a valve control apparatus (10) which is configured to define a first setpoint state of a first valve (88) of the brake system, at least taking into account a supplied information signal (12) with respect to a generator braking torque (bgen) of a generator which is currently applied or is to be applied, which first valve (88) is connected to a master brake cylinder (62) of the brake system and to a fluid storage device of the brake system in such a way that a brake fluid volume can be displaced from the master brake cylinder (62) into the fluid storage device via the first valve (88) which is controlled into an at least partially opened state, and to output a first control signal (14, 12), corresponding to the first setpoint state, to the first valve (88);
wherein, the first setpoint state for a valve (88) connected via at least one suction line (89) to a braking medium reservoir (61) of the brake system as a fluid storage device can be defined as the first valve (88) by means of the valve control apparatus (10); and
wherein the valve control apparatus (10) is additionally configured to define a second setpoint state of a second valve (86) of the brake system, taking into account a first sensor signal (16a) relating to an activation intensity (s) of activation of a brake actuation element (64) of the brake system, of the information signal (12) and/or of the first setpoint state, which second valve (86) is arranged as an isolating valve (86) between the master brake cylinder (62) and a brake circuit (52) of the brake system with the first valve (88) and at least one wheel brake cylinder (54b), and to output a second control signal (18, 12) corresponding to the second setpoint state to the second valve (86);
**characterized in that**
the valve control apparatus (10) is additionally configured to compare the first sensor signal (16a) with a predefined comparison signal relating to a minimum activation intensity (smin) starting from which a driver braking force (Fb), applied to the brake activation element (64), can be transmitted to an adjustable master brake cylinder piston (63) of the master brake cylinder (62), and, insofar as the first sensor signal (16a) is below the comparison signal, to control the second valve (86) into an at least partially open state in such a way that a brake fluid volume which is forced out of the master brake cylinder (62) can be displaced into the brake circuit (52) via the second valve (86) which is controlled into the at least partially opened state, or, insofar as the first sensor signal (16a) exceeds the comparison signal, to control the second valve (86) into a closed state in such a way that a hydraulic connection between the master brake cylinder (62) and the brake circuit (52) is prevented.

2. Control device (100) according to Claim 1, wherein the control device (100) comprises a pump control apparatus (20) which is configured, insofar as the first sensor signal (16a) approaches the comparison signal when the activation intensity (s) increases over time, to output a pump control signal (22) to a pump (90) of the brake system, by means of which signal (22) the pump (90) can be actuated to pump a brake fluid volume from the braking medium reservoir (61) into the master brake cylinder (62) via the second valve (86) which is in the at least partially opened state.

3. Control device (100) according to Claim 1 or 2, wherein the control device (100) comprises a generator control apparatus (24) by means of which the generator braking torque (bgen) of the generator which is to be applied can be defined taking into account the first sensor signal (16a) and/or a second sensor signal and/or information signal (16b) relating to at least one executable possible generator braking torque (bgenO), and a generator control signal (26), corresponding to the defined generator braking torque (bgen) which is to be applied, can be output to the generator.

4. Brake system for a vehicle having a control device (100) according to one of the preceding claims.

5. Method for operating a brake system of a vehicle having the steps:
defining a first setpoint state of a first valve (88) of the brake system, which valve (88) is connected to a master brake cylinder (62) of the brake system and to a fluid storage device of the brake system in such a way that a brake fluid volume can be displaced from the master brake cylinder (62) into the fluid storage device via the first valve (88) which is controlled into an at least partially opened state, taking into account a generator braking torque variable relating to a generator braking torque (bgen) of a generator which is currently applied or is to be applied, wherein the first setpoint state for a valve (88) which is connected via at least one suction line (89) to a braking medium reservoir (61) of the brake system as a fluid storage device is defined (S1) as a first valve (88); and
actuating the first valve (88) taking into account the defined first setpoint state (S2);
wherein a second setpoint state of a second valve (86) of the brake system is defined (S3) taking into account an actuation intensity variable relating to an activation intensity (s) of an activation of a brake activation element (64) of the brake system, the generator braking torque variable and/or the first setpoint state, which valve (86) is arranged as an isolating valve (86) between the master brake cylinder (62) and a brake circuit (52) of the brake system with the first valve (88) and at least one wheel brake cylinder (54b), and the second valve (86) is actuated (S4) taking into account the defined second setpoint state;
**characterized in that**
the actuation intensity variable is compared with a minimum activation intensity variable relating to a minimum activation intensity (smin) starting from which a driver braking force (Fb), which is applied to a brake activation element (64), is transmitted to an adjustable master brake cylinder piston (63) of the master brake cylinder (62), and, insofar as the activation intensity variable is below the minimum activation intensity variable, the second valve (86) is controlled into an at least partially opened state in such a way that a brake fluid volume which is forced out of the master brake cylinder (62) is displaced into the brake circuit (52) via the second valve (86) which is controlled into the at least partially opened state, or, insofar as the activation intensity variable exceeds the minimum activation intensity variable, the second valve (86) is controlled into a closed state in such a way that a hydraulic connection between the master brake cylinder (62) and the brake circuit (52) is prevented.

6. Method according to Claim 5, wherein the generator braking torque variable is compared with a predefined minimum braking torque variable, and, insofar as the generator braking torque variable is above the minimum braking torque variable, the first valve (88) is controlled into the at least partially opened state in such a way that a brake fluid volume which is forced out of the master brake cylinder (62) is displaced into the braking medium reservoir (61) via the first valve (88) which is controlled into the at least partially opened state, or, insofar as the generator braking torque variable is below the minimum braking torque variable, the first valve (88) is controlled into a closed state in such a way that a hydraulic connection between the master brake cylinder (62) and the braking medium reservoir (61) is prevented.

7. Method according to Claim 5 or 6, wherein, insofar as the activation intensity variable tends towards the minimum activation intensity variable when the activation intensity variable increases over time, a braking fluid volume is pumped (S5), by means of a pump (90) of the brake system, out of the braking medium reservoir (61) into the master brake cylinder (62) via the second valve (86) which is in the at least partially opened state.

8. Method according to one of claims 5 to 7, wherein, insofar as the activation intensity variable tends towards the minimum activation intensity variable when the activation intensity variable decreases over time, the second valve (86) is controlled into the at least partially opened state in such a way that a braking fluid volume is transferred (S6) from the braking medium reservoir (61) into the master brake cylinder (62) via the second valve (86) which is in the at least partially opened state.

## Revendications

1. Dispositif de commande (100) destiné à un système de freinage d'un véhicule, comprenant un dispositif de commande de soupapes (10) conçu pour établir, au moins sur la base d'un signal d'information (12) fourni concernant un couple de freinage de générateur (bgen) d'un générateur, actuellement exercé ou à exercer, un premier état théorique d'une première soupape (88) du système de freinage, ladite soupape étant reliée à un maître-cylindre (62) du système de freinage et à un dispositif accumulateur de liquide du système de freinage de manière à permettre le déplacement d'un volume de liquide de freins du maître-cylindre (62) jusqu'au dispositif accumulateur de liquide par l'intermédiaire de la première soupape (88) commandée dans un état au moins partiellement ouvert, et pour délivrer à la première soupape (88) un premier signal de commande (14, 12) correspondant au premier état théorique ;
dans lequel le premier état théorique peut être établi au moyen du dispositif de commande de soupapes (10) pour une soupape (88), en tant que première soupape (88), reliée à un réservoir de fluide de freins (61) du système de freinage, en tant que dispositif accumulateur de liquide, par l'intermédiaire d'au moins une conduite d'admission (89) ; et
dans lequel le dispositif de commande de soupapes (10) est en outre conçu pour établir, sur la base d'un premier signal de capteur (16a) concernant une intensité d'actionnement (s) d'un actionnement d'un élément d'actionnement des freins (64) du système de freinage, du signal d'information (12) et/ou du premier état théorique, un deuxième état théorique d'une deuxième soupape (86) du système de freinage, ladite soupape étant disposée, en tant que soupape de séparation (86), entre le maître-cylindre (62) et un circuit de freinage (52) du système de freinage comportant la première soupape (88) et au moins un cylindre de freinage de roue (54b), et pour délivrer à la deuxième soupape (86) un deuxième signal de commande (18, 12) correspondant au deuxième état théorique ; **caractérisé en ce que** le dispositif de commande de soupapes (10) est en outre conçu pour comparer le premier signal de capteur (16a) à un signal de comparaison prédéterminé concernant une intensité d'actionnement minimale (smin) à partir de laquelle une force de freinage de conducteur (Fb) appliquée à l'élément d'actionnement des freins (64) peut être transmise à un piston de maître-cylindre (63) réglable du maître-cylindre (62) et lorsque le premier signal de capteur (16a) est inférieur au signal de comparaison, pour commander la deuxième soupape (86) dans un état au moins partiellement ouvert de manière à permettre le déplacement d'un volume de liquide de freins expulsé du maître-cylindre (62) jusqu'au circuit de freinage (52) par l'intermédiaire de la deuxième soupape (86) commandée dans l'état au moins partiellement ouvert, ou lorsque le premier signal de capteur (16a) est supérieur au signal de comparaison, pour commander la deuxième soupape (86) dans un état fermé de manière à empêcher une liaison hydraulique entre le maître-cylindre (62) et le circuit de freinage (52).

2. Dispositif de commande (100) selon la revendication 1, dans lequel le dispositif de commande (100) comprend un dispositif de commande de pompe (20) qui est conçu, lorsque le premier signal de capteur (16a) tend vers le signal de comparaison lorsque l'intensité d'actionnement (s) augmente au cours du temps, pour délivrer un signal de commande de pompe (22) à une pompe (90) du système de freinage, ledit signal permettant de commander la pompe (90) afin de pomper un volume de liquide de freins du réservoir de fluide de freins (61) jusqu'au maître-cylindre (62) par l'intermédiaire de la deuxième soupape (86) se trouvant dans un état au moins partiellement ouvert.

3. Dispositif de commande (100) selon la revendication 1 ou 2, dans lequel le dispositif de commande (100) comprend un dispositif de commande de générateur (24) au moyen duquel le couple de freinage de générateur (bgen) du générateur devant être exercé peut être établi sur la base du premier signal de capteur (16a) et/ou d'un deuxième signal de capteur et/ou d'information (16b) concernant au moins un couple de freinage de générateur possible (bgen0) pouvant être produit et un signal de commande de générateur (26) correspondant au couple de freinage de générateur établi (bgen) à exercer déterminé peut être délivré au générateur.

4. Système de freinage destiné à un véhicule comportant un dispositif de commande (100) selon l'une quelconque des revendications précédentes.

5. Procédé de mise en fonctionnement d'un système de freinage d'un véhicule comportant les étapes consistant à :
établir un premier état théorique d'une première soupape (88) du système de freinage, ladite soupape étant reliée à un maître-cylindre (62) du système de freinage et à un dispositif accumulateur de liquide du système de freinage de manière à permettre le déplacement d'un volume de liquide de freins du maître-cylindre (62) jusqu'au dispositif accumulateur de liquide par l'intermédiaire de la première soupape (88) commandée dans un état au moins partiellement ouvert, sur la base d'une grandeur de couple de freinage de générateur concernant un couple de freinage de générateur (bgen) d'un générateur, actuellement exercé ou à exercer, dans lequel le premier état théorique est établi (S1) pour une soupape (88), en tant que première soupape (88), reliée par l'intermédiaire d'au moins une conduite d'admission (89) à un réservoir de fluide de freins (61) du système de freinage, en tant que dispositif accumulateur de liquide ; et
commander la première soupape (88) sur la base du premier état théorique (S2) établi ;
dans lequel, sur la base d'une grandeur d'intensité d'actionnement concernant une intensité d'actionnement (s) d'un actionnement d'un élément d'actionnement des freins (64) du système de freinage, de la grandeur de couple de freinage de générateur et/ou du premier état théorique, un deuxième état théorique d'une deuxième soupape (86) du système de freinage, ladite soupape étant disposée, en tant que soupape de séparation (86), entre le maître-cylindre (62) et un circuit de freinage (52) du système de freinage comportant la première soupape (88) et au moins un cylindre de freinage de roue (54b), est établi (S3) et la deuxième soupape (86) est commandée (S4) sur la base du deuxième état théorique établi ;
**caractérisé en ce que** la grandeur d'intensité d'actionnement est comparée à une grandeur d'intensité d'actionnement minimale concernant une intensité d'actionnement minimale (smin) à partir de laquelle une force de freinage de conducteur (Fb) appliquée à un élément d'actionnement des freins (64) est transmise à un piston de maître-cylindre (63) réglable du maître-cylindre (62) et, lorsque la grandeur d'intensité d'actionnement est inférieure à la grandeur d'intensité d'actionnement minimale, la deuxième soupape (86) est commandée dans un état au moins partiellement ouvert de manière à déplacer un volume de liquide de freins expulsé du maître-cylindre (62) jusqu'au circuit de freinage (52) par l'intermédiaire de la deuxième soupape (86) commandée dans l'état au moins partiellement ouvert, ou, lorsque la grandeur d'intensité d'actionnement dépasse la grandeur d'intensité d'actionnement minimale, la deuxième soupape (86) est commandée dans un état fermé de manière à empêcher une liaison hydraulique entre le maître-cylindre (62) et le circuit de freinage (52).

6. Procédé selon la revendication 5, dans lequel la grandeur de couple de freinage de générateur est comparée à une grandeur de couple de freinage minimale prédéterminée et, lorsque la grandeur de couple de freinage de générateur est supérieure à la grandeur de couple de freinage minimale, la première soupape (88) est commandée dans l'état au moins partiellement ouvert de manière à ce qu'un volume de liquide de freinage expulsé du maître-cylindre (62) soit déplacé vers le réservoir de fluide de freins (61) par l'intermédiaire de la première soupape (88) commandée dans l'état au moins partiellement ouvert, ou, lorsque la grandeur de couple de freinage de générateur est inférieure à la grandeur de couple de freinage minimale, la première soupape (88) est commandée dans un état fermé de manière à empêcher une liaison hydraulique entre le maître-cylindre (62) et le réservoir de fluide de freins (61).

7. Procédé selon la revendication 5 ou 6, dans lequel, lorsque la grandeur d'intensité d'actionnement tend vers la grandeur d'intensité d'actionnement minimale lorsque la grandeur d'intensité d'actionnement augmente au cours du temps, un volume de liquide de freinage est pompé (S5) au moyen d'une pompe (90) du système de freinage du réservoir de fluide de freins (61) jusqu'au maître-cylindre (62) par l'intermédiaire de la deuxième soupape (86) se trouvant dans un état au moins partiellement ouvert.

8. Procédé selon l'une quelconque des revendications 5 à 7, dans lequel, lorsque la grandeur d'intensité d'actionnement tend vers la grandeur d'intensité d'actionnement minimale lorsque la grandeur d'intensité d'actionnement diminue au cours du temps, la deuxième soupape (86) est commandée dans l'état au moins partiellement ouvert de manière à ce qu'un volume de fluide de freins soit transféré (S6) du réservoir de fluide de freins (61) jusqu'au maître-cylindre (62) par l'intermédiaire de la deuxième soupape (86) se trouvant dans l'état au moins partiellement ouvert.
